# EUROPEAN PATENT APPLICATION

(11) **EP 4 668 819 A1**
(43) Date of publication of application: **24.12.2025**
(21) Application number: 24777849.1
(22) Date of filing: 21.03.2024
(51) Int. Cl.: H04W 12/50, H04W 76/14, H04W 88/04, H04W 12/041, H04W 12/0431, H04W 12/069, H04W 12/72

(54) **SECURITY ESTABLISHMENT METHOD AND RELATED APPARATUS**

(30) Priority: 27.03.2023 CN 202310313402
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); LI, He, Shenzhen, Guangdong 518129 (CN)
(74) Representative: Grünecker Patent- und Rechtsanwälte PartG mbB
(86) International application number: PCT/CN2024/082865
(87) International publication number: WO 2024/199060

(57) **Abstract**

A security establishment method and a related apparatus are provided, to select an appropriate security establishment mechanism for a communication apparatus, thereby ensuring communication security. In the method, a first communication apparatus initiating proximity-based service communication determines a target mechanism from a plurality of mechanisms, for example, determines the target mechanism according to a mechanism selection rule, and sends a request message, to request a receiver to perform security establishment with the first communication apparatus by using the target mechanism. A second communication apparatus that receives the request message sends a first message to the first communication apparatus based on a network coverage status, to indicate whether to agree to perform the security establishment with the first communication apparatus by using the target mechanism. The second communication apparatus may agree to use a security establishment mechanism without network assistance or a security establishment mechanism with network assistance when being in network coverage; or agree to use the security establishment mechanism without network assistance when not being in network coverage. After negotiation between the first communication apparatus and the second communication apparatus, the first communication apparatus and the second communication apparatus may establish a secure connection by using a jointly supported security establishment mechanism.

## Description

This application claims priority to Chinese Patent Application No. 202310313402.6, filed with the China National Intellectual Property Administration on March 27, 2023 and entitled "SECURITY ESTABLISHMENT METHOD AND RELATED APPARATUS", which is incorporated herein by reference in its entirety.

### TECHNICAL FIELD

This application relates to the wireless communication field, and in particular, to a security establishment method and a related apparatus.

### BACKGROUND

With development of mobile communication, device-to-device (device-to-device, D2D) communication allows direct communication between user equipments (user equipments, UEs). UE may share spectrum resources with another UE in a cell under control of a cell network, to help improve utilization of the spectrum resources. Proximity-based service (proximity-based service, ProSe) communication is a type of D2D communication. User equipments having a ProSe communication function may communicate with each other through a PC5 interface.

When two UEs need to perform ProSe communication, if peer UE is out of signal coverage of initiating UE, or a signal is weak, relay (relay) UE may be used to assist communication. The relay UE may also be referred to as a UE-to-UE relay (UE-to-UE Relay, U2U Relay). In the following description, for ease of distinguishing from the relay UE, UE that performs ProSe communication is denoted as end UE (end UE).

Security establishment (security establishment) between the end UE and the U2U relay is an important part to ensure communication security. Therefore, it is expected to provide a mechanism that can be used for the security establishment between the end UE and the U2U relay.

### SUMMARY

This application provides a security establishment method that can be used for security establishment between end UE and a U2U relay, to ensure communication security.

According to a first aspect, a security establishment method is provided. The method may be applied to a first communication apparatus in ProSe communication. The first communication apparatus may be UE, or may be a component (for example, a chip, a chip system, or a processor) configured in the UE, or may be a logic module, software, or the like that can implement all or some functions of the first communication apparatus.

For example, the method includes: determining a target mechanism from a plurality of mechanisms, where the plurality of target mechanisms include a security establishment mechanism with network assistance and a security establishment mechanism without network assistance; sending a request message, where the request message is used to request a second communication apparatus that receives the request message to perform security establishment with the first communication apparatus by using the target mechanism; and receiving a first message from the second communication apparatus, where the first message indicates whether to agree to perform the security establishment with the first communication apparatus by using the target mechanism.

The request message may indicate the target mechanism.

Based on the foregoing mechanism, the first communication apparatus that initiates the ProSe communication may select the target mechanism from the plurality of mechanisms, and negotiate, by sending the request message indicating the target mechanism, with the second communication apparatus that receives the request message. For example, when the second communication apparatus agrees to use the target mechanism, the first communication apparatus may directly perform the security establishment with the second communication apparatus by using the target mechanism; or when the second communication apparatus does not agree to use the target mechanism, the first communication apparatus may continue to select another mechanism as the target mechanism to send the request message, and negotiate with the second communication apparatus. Therefore, a mechanism supported by both the first communication apparatus and the second communication apparatus can be determined to perform the security establishment. This facilitates successful establishment of a secure connection.

In addition, the plurality of mechanisms include the security establishment mechanism with network assistance and the security establishment mechanism without network assistance, and different cases are considered. In one aspect, the mechanism without network assistance is provided for a case in which the second communication apparatus is not in network coverage, so that the second communication apparatus that is not in the network coverage can also establish the secure connection to the first communication apparatus when the second communication apparatus is not connected to a network, and is free from dependency on network assistance. In another aspect, the mechanism with network assistance is provided for a case in which the second communication apparatus is in network coverage, so that the security establishment between the second communication apparatus and the first network device can be implemented based on latest subscription information. This avoids a possibility of a security establishment failure that may be caused by a problem like a permission change of the first communication apparatus or the second communication apparatus, to avoid a resource waste that may be caused by the security establishment process.

It should be understood that, when the first message indicates whether to agree to perform the security establishment with the first communication apparatus by using the target mechanism, an explicit manner or an implicit manner may be used for indicating. For example, when the first message indicates to perform the security establishment with the first communication apparatus by using the target mechanism, a message (for example, the direct security mode command (direct security mode command) message, the security mode command message, or the direct authentication and key establishment (direct authentication and key establishment) message described below) in a security procedure establishment process corresponding to the target mechanism may implicitly indicate agreeing to use the target mechanism. In this case, it may be considered that the second communication apparatus directly performs the security establishment with the first communication apparatus by using the target mechanism.

Therefore, another possible implementation of the foregoing method is: determining a target mechanism from a plurality of mechanisms, where the plurality of target mechanisms include a security establishment mechanism with network assistance and a security establishment mechanism without network assistance; sending a request message, where the request message is used to request a second communication apparatus that receives the request message to perform security establishment with the first communication apparatus by using the target mechanism; and performing the security establishment with the second communication apparatus by using the target mechanism.

With reference to the first aspect, in some possible implementations of the first aspect, the determining a target mechanism from a plurality of mechanisms includes: determining the target mechanism from the plurality of mechanisms according to a mechanism selection rule.

The mechanism selection rule may indicate a rule used to determine the target mechanism. The first communication apparatus may determine the target mechanism from the plurality of mechanisms according to the mechanism selection rule, or may randomly determine the target mechanism from the plurality of mechanisms. This is not limited in this application.

Optionally, the mechanism selection rule includes a correspondence between a first RSC corresponding to the ProSe communication and a first mechanism indicator, where the first mechanism indicator indicates a first mechanism in the plurality of mechanisms. The determining the target mechanism from the plurality of mechanisms according to a mechanism selection rule includes: determining, based on the correspondence, the first mechanism corresponding to the first mechanism indicator as the target mechanism.

In other words, an RSC is associated with a mechanism indicator. Different RSCs may be associated with different mechanism indicators. Each RSC may be associated with one or more mechanism indicators, and one or more mechanisms are determined based on the one or more mechanism indicators. The foregoing mechanism selection rule is not limited to including the correspondence between the first RSC and the first mechanism indicator, and may further include a correspondence between another RSC and one or more mechanism indicators. The first communication apparatus may select, based on a type of a service currently to be performed, a corresponding RSC to determine the target mechanism. For example, if the first communication apparatus intends to initiate the ProSe communication, the first communication apparatus may determine the target mechanism by using the first RSC corresponding to the ProSe communication, determine the first mechanism indicator based on the first RSC and the correspondence, and further determine the target mechanism based on the first mechanism indicator.

Optionally, the mechanism selection rule includes priority information, and the priority information indicates a priority sequence of mechanisms in the plurality of mechanisms. The determining the target mechanism from the plurality of mechanisms according to a mechanism selection rule includes: determining the target mechanism from the plurality of mechanisms based on the priority sequence of the plurality of mechanisms.

For example, a mechanism with a higher priority is preferentially selected as the target mechanism.

In a possible design, the mechanism selection rule is a correspondence between at least one RSC and at least one mechanism indicator. In another possible design, the mechanism selection rule is the priority information. In still another possible design, the mechanism selection rule includes but is not limited to a correspondence between at least one RSC and at least one mechanism indicator, and the priority information. Specific content of the mechanism selection rule is not limited in this application.

The mechanism selection rule may be preconfigured, or may be obtained from a network side.

As described above, the first communication apparatus may be UE, or a component configured in the UE, or another logic module or software that can be configured to implement some or all functions of the first communication apparatus. If the mechanism selection rule is preconfigured, in a possible case, the mechanism selection rule may be prestored in the first communication apparatus, or in another possible case, the mechanism selection rule is prestored in a memory coupled to the first communication apparatus.

If the mechanism selection rule is obtained from the network side, optionally, the method further includes: receiving the mechanism selection rule from a policy control function (policy control function, PCF). In other words, the mechanism selection rule may be obtained from the PCF.

Optionally, the mechanism selection rule is determined based on service specific information (service specific information) of a ProSe corresponding to the first communication apparatus.

In other words, the service specific information of the ProSe corresponding to the first communication apparatus includes information used to determine the mechanism selection rule, or includes the mechanism selection rule. The PCF may determine the mechanism selection rule based on the obtained service specific information of the ProSe, and send the determined mechanism selection rule to the first communication apparatus. Because the service specific information of the ProSe comes from subscription information, the mechanism selection rule is determined based on subscription information of the first communication apparatus. Therefore, the determined mechanism selection rule is a rule applicable to the first communication apparatus.

The first message received by the first communication apparatus may vary depending on whether the second communication apparatus agrees to use the target mechanism, or may vary with the target mechanism. For example, the first message is a first message received by the first communication apparatus after the first communication apparatus sends the request message. In other words, the first communication apparatus does not receive another message after sending the request message and before receiving the first message.

Optionally, the target mechanism is the security establishment mechanism without network assistance, the first message is a direct authentication and key establishment message, and the direct authentication and key establishment message indicates agreeing to perform the security establishment with the first communication apparatus by using the security establishment mechanism without network assistance.

Optionally, the target mechanism is the security establishment mechanism without network assistance, the first message is a direct security mode command message, and the direct security mode command message indicates agreeing to perform the security establishment with the first communication apparatus by using the security establishment mechanism with network assistance.

Optionally, the first message is a reject message, and the reject message indicates not agreeing to perform the security establishment with the first communication apparatus by using the target mechanism.

Further, the reject message indicates one or more of the following: a reason for not agreeing to perform the security establishment with the first communication apparatus by using the target mechanism, a security establishment mechanism supported by the second communication apparatus, or a security establishment mechanism not supported by the second communication apparatus.

It can be learned that, when the second communication apparatus does not agree to use the target mechanism, the first message is the reject message, and one or more of the reason for rejection, the supported mechanism, or the unsupported mechanism of the second communication apparatus may be further indicated, so that when the first communication apparatus determines the target mechanism next time, a mechanism supported by the second communication apparatus can be determined.

According to a second aspect, a security establishment method is provided. The method may be applied to a second communication apparatus, and the second communication apparatus may be a communication apparatus that receives a request message from a first communication apparatus. The second communication apparatus may be UE, or may be a component (for example, a chip, a chip system, or a processor) configured in the UE, or may be a logic module, software, or the like that can implement all or some functions of the second communication apparatus.

For example, the method includes: receiving the request message from the first communication apparatus, where the request message is used to request the second communication apparatus to perform security establishment with the first communication apparatus by using a target mechanism, and the target mechanism is a security establishment mechanism with network assistance or a security establishment mechanism without network assistance; and sending a first message to the first communication apparatus based on a network coverage status, where the first message indicates whether to agree to perform the security establishment with the first communication apparatus by using the target mechanism, and the network coverage status includes being in network coverage or not being in network coverage.

The request message may indicate to determine the target mechanism, so that the second communication apparatus determines the target mechanism. In other words, the request message may be used to determine the target mechanism.

Being in network coverage may mean being in coverage of a base station and being capable of successfully establishing a connection to a network. Correspondingly, not being in network coverage may mean not being capable of successfully establishing a connection to the network, for example, being out of coverage of a base station, or being in coverage of the base station but not being capable of successfully establishing a connection to the network due to reasons such as an excessive quantity of users accessing the network leads to weak signal quality. In other words, the network coverage status may be used to determine whether the UE can successfully establish a connection to the network.

Based on the foregoing mechanism, the second communication apparatus that receives the request message may determine, based on the request message, the target mechanism that the first communication apparatus requests to use, and further determine, with reference to the network coverage status of the second communication apparatus, whether the second communication apparatus supports the target mechanism. In this way, a determined result may adapt to the network coverage status of the second communication apparatus. The second communication apparatus may provide different feedbacks for different target mechanisms based on different network coverage statuses. The first communication apparatus may make different responses based on the different feedbacks. For example, when the first message indicates agreeing to use the target mechanism, the first communication apparatus performs the security establishment with the second communication apparatus by using the target mechanism. For another example, when the first message indicates refusing to use the target mechanism, the first communication apparatus re-determines a target mechanism and negotiates with the second communication apparatus. In this way, the first communication apparatus and the second communication apparatus may negotiate to obtain a mechanism supported by both parties. This facilitates successful establishment of a secure connection.

It should be understood that, when the first message indicates whether to agree to perform the security establishment with the first communication apparatus by using the target mechanism, an explicit manner or an implicit manner may be used for indicating. For example, when the first message indicates to perform the security establishment with the first communication apparatus by using the target mechanism, a message (for example, the direct security mode command message or the direct authentication and key establishment message described below) in a security procedure establishment process corresponding to the target mechanism may implicitly indicate agreeing to use the target mechanism. In this case, it may be considered that the second communication apparatus directly performs the security establishment with the first communication apparatus by using the target mechanism.

Therefore, another possible implementation of the foregoing method is: receiving the request message from the first communication apparatus, where the request message is used to request the second communication apparatus to perform security establishment with the first communication apparatus by using a target mechanism, and the target mechanism is a security establishment mechanism with network assistance or a security establishment mechanism without network assistance; and performing the security establishment with the first communication apparatus by using the target mechanism based on a network coverage status, where the network coverage status includes being in network coverage or not being in network coverage. The following lists different content indicated by the first message in different network coverage statuses.

Optionally, if the network coverage status is being in network coverage, the first message indicates agreeing to perform the security establishment with the first communication apparatus by using the target mechanism.

Correspondingly, the performing the security establishment with the first communication apparatus by using the target mechanism based on a network coverage status includes: if the network coverage status is being in network coverage, performing the security establishment with the first communication apparatus by using the target mechanism.

If the second communication apparatus is in network coverage, the second communication apparatus may support a mechanism with network assistance and a mechanism without network assistance. Therefore, the security establishment may be performed based on the target mechanism used by the first communication apparatus.

Optionally, if the target mechanism is the security establishment mechanism with network assistance, and the network coverage status is not being in network coverage, the first message indicates not agreeing to perform the security establishment with the first communication apparatus by using the target mechanism.

If the second communication apparatus is not in network coverage, the second communication apparatus may support the mechanism without network assistance, and does not support the mechanism with network assistance. If the target mechanism is the mechanism with network assistance, the second communication apparatus may reject the target mechanism. This can avoid a possibility of an establishment failure caused when the first communication apparatus performs the security establishment with the second communication apparatus by using the target mechanism, but the second communication apparatus does not support the target mechanism, to avoid a resource waste that may be caused by a security establishment process.

Optionally, if the target mechanism is the security establishment mechanism without network assistance, and the network coverage status is not being in network coverage, the first message indicates agreeing to perform the security establishment with the first communication apparatus by using the target mechanism.

Correspondingly, if the target mechanism is the security establishment mechanism without network assistance, the performing the security establishment with the first communication apparatus by using the target mechanism based on a network coverage status includes: if the network coverage status is not being in network coverage, performing the security establishment with the first communication apparatus by using the target mechanism.

If the second communication apparatus is not in network coverage, the second communication apparatus may support the mechanism without network assistance, and does not support the mechanism with network assistance. If the target mechanism is the mechanism without network assistance, the second communication apparatus may agree to use the target mechanism. In this way, the first communication apparatus may perform the security establishment with the second communication apparatus without repeating procedures such as determining the target mechanism and negotiating with the second communication apparatus, so that signalling overheads caused by negotiation with the second communication apparatus can be reduced, and time consumption can also be reduced.

In conclusion, it may be learned that in different network coverage statuses, the second communication apparatus may agree to perform the security establishment with the first communication apparatus by using different mechanisms. In this way, the security establishment mechanism does not need to be confined to a specific mechanism, but may be flexibly adjusted based on the network coverage status of the second communication apparatus. This facilitates successful establishment of a secure connection between the first communication apparatus and the second communication apparatus.

The first message sent by the second communication apparatus may vary depending on whether the second communication apparatus agrees to use the target mechanism, or may vary with the target mechanism.

Optionally, the target mechanism is the security establishment mechanism without network assistance, the first message is a direct authentication and key establishment message, and the direct authentication and key establishment message indicates agreeing to perform the security establishment with the first communication apparatus by using the security establishment mechanism without network assistance.

Optionally, the target mechanism is the security establishment mechanism with network assistance, the first message is a direct security mode command message, and the direct security mode command message indicates agreeing to use the security establishment mechanism with network assistance.

Optionally, when the second communication apparatus does not agree to perform the security establishment with the first communication apparatus by using the target mechanism, the first message is a reject message, and the reject message indicates not agreeing to perform the security establishment with the first communication apparatus by using the target mechanism.

Further, the reject message indicates one or more of the following: a reason for not agreeing to perform the security establishment with the first communication apparatus by using the target mechanism, a security establishment mechanism supported by the second communication apparatus, or a security establishment mechanism not supported by the second communication apparatus.

It can be learned that when the second communication apparatus does not agree to use the target mechanism, the first message is the reject message, and one or more of the reason for rejection, the supported mechanism, or the unsupported mechanism of the second communication apparatus may be further indicated, so that when the first communication apparatus determines the target mechanism next time, a mechanism supported by the second communication apparatus can be determined.

With reference to the first aspect or the second aspect, in some possible implementations, the request message is a direct communication request (direct communication request, DCR) message. In other words, the DCR message may indicate the target mechanism, or may be used to determine the target mechanism.

It should be understood that, as an example of the request message, the DCR message shall not constitute any limitation on this application.

In a possible case, the target mechanism is the security establishment mechanism without network assistance, and the request message includes key establishment information (key_est_info).

In another possible case, the target mechanism is the security establishment mechanism with network assistance, and the request message includes at least one of the following: a control plane ProSe remote user key (control plane ProSe remote user key, CP-PRUK) identifier (identifier, ID) (CP-PRUK ID), a user plane ProSe remote user key (user plane ProSe remote user key, UP-PRUK) ID, or a subscription concealed identifier (subscription concealed identifier, SUCI).

It can be learned through comparison that information elements included in the request message vary with the target mechanism. A request message corresponding to the mechanism with network assistance meets the following: including at least one of the CP-PRUK ID, the UP-PRUK ID, or the SUCI, and/or excluding the key_est_info. A request message corresponding to the mechanism without network assistance meets the following: including the key_est_info, and/or excluding the CP-PRUK ID, the UP-PRUK ID, and the SUCI.

Therefore, a specific mechanism indicated by the request message may be determined by determining whether the request message includes any one of the key_est_info, the CP-PRUK ID, the UP-PRUK ID, or the SUCI.

Optionally, the security establishment mechanism with network assistance is a control plane (control plane, CP)-based security establishment mechanism (which may be referred to as a control plane-based mechanism (CP-based solution) for short) or a user plane (user plane, UP)-based security establishment mechanism (which may be referred to as a user plane-based mechanism (UP-based solution) for short).

Both the control plane-based security establishment mechanism and the user plane-based security establishment mechanism are security establishment mechanisms with network assistance. Therefore, a request message corresponding to the two mechanisms meets the following: including at least one of the CP-PRUK ID, the UP-PRUK ID, or the SUCI, and/or excluding the key_est_info.

Optionally, the target mechanism is the security establishment mechanism with network assistance, the request message further includes an RSC, and the RSC is used to determine the control plane-based security establishment mechanism or the user plane-based security establishment mechanism.

When the target mechanism is the control plane-based security establishment mechanism or the user plane-based security establishment mechanism, a corresponding RSC value is different. Therefore, the second communication apparatus that receives the request message may determine, based on a value of the RSC, whether the target mechanism is the control plane-based mechanism or the user plane-based mechanism.

According to a third aspect, a security establishment method is provided, and is applied to a PCF. The method may be performed by the PCF, or may be performed by a component (for example, a chip, a chip system, or a processor) configured in the PCF, or may be implemented by a logic module or software that can implement all or some functions of the PCF.

For example, the method includes: determining a mechanism selection rule, where the mechanism selection rule is used to determine, from a plurality of mechanisms, a target mechanism for security establishment between a first communication apparatus and a second communication apparatus, the plurality of mechanisms include a security establishment mechanism with network assistance and a security establishment mechanism without network assistance, and the first communication apparatus is an apparatus that initiates proximity-based service communication; and sending the mechanism selection rule to the first communication apparatus.

Based on the foregoing mechanism, the mechanism selection rule is sent to the first communication apparatus, so that the first communication apparatus determines the target mechanism from the plurality of mechanisms, to perform the security establishment with the second communication apparatus. The plurality of mechanisms include the security establishment mechanism with network assistance and the security establishment mechanism without network assistance. Different cases are considered, and an implementable mechanism is provided for both a communication apparatus in network coverage and a communication apparatus not in network coverage. This facilitates successful establishment of a secure connection.

With reference to the third aspect, in some possible implementations of the third aspect, the method further includes: receiving information from unified data management (unified data management, UDM), where the information is used to determine the mechanism selection rule.

Optionally, the information is service specific information of a ProSe corresponding to the first communication apparatus.

In other words, the service specific information of the ProSe corresponding to the first communication apparatus includes the information used to determine the mechanism selection rule, or includes the mechanism selection rule. The PCF may send the determined mechanism selection rule to the first communication apparatus. Because the service specific information of the ProSe comes from subscription information, the mechanism selection rule is determined based on subscription information of the first communication apparatus. Therefore, the determined mechanism selection rule is a rule applicable to the first communication apparatus.

Optionally, the mechanism selection rule includes a correspondence between a first RSC corresponding to ProSe communication and a first mechanism indicator, where the first mechanism indicator indicates a first mechanism in the plurality of mechanisms.

In other words, the mechanism selection rule includes a correspondence between one or more RSCs and one or more mechanism indicators in the plurality of mechanisms.

Optionally, the mechanism selection rule includes priority information, and the priority information indicates a priority sequence of the plurality of mechanisms.

For descriptions of the mechanism selection rule, refer to related descriptions in the first aspect. Details are not described again.

According to a fourth aspect, a security establishment method is provided. The method may be applied to a first communication apparatus in ProSe communication. The first communication apparatus may be UE, or may be a component (for example, a chip, a chip system, or a processor) configured in the UE, or may be a logic module, software, or the like that can implement all or some functions of the first communication apparatus.

For example, the method includes: sending at least one request message, where the at least one request message indicates a plurality of mechanisms, and the plurality of mechanisms include a security establishment mechanism with network assistance and a security establishment mechanism without network assistance; and receiving a second message from a second communication apparatus, where the second message indicates to perform security establishment with the first communication apparatus by using one of the plurality of mechanisms.

Based on the foregoing mechanism, the first communication apparatus sends the at least one request message indicating the plurality of mechanisms, so that the second communication apparatus that receives the at least one request message can select one mechanism from the plurality of mechanisms to perform the security establishment with the first communication apparatus. The plurality of mechanisms include the security establishment mechanism with network assistance and the security establishment mechanism without network assistance. Different cases are considered, and an implementable mechanism is provided for both a case in which the second communication apparatus is in network coverage and a case in which the second communication apparatus is not in network coverage. Therefore, the second communication apparatus may select one of the plurality of mechanisms based on a network coverage status, and indicate the mechanism to the first communication apparatus via the second message. In this way, the two parties can perform the security establishment. This mechanism does not require a plurality of negotiations between the first communication apparatus and the second communication apparatus, and therefore helps to complete security establishment more quickly.

With reference to the fourth aspect, in some possible implementations of the fourth aspect, the method further includes: determining a mechanism indicated by the second message as a target mechanism; and performing the security establishment with the second communication apparatus by using the target mechanism.

By determining the mechanism indicated by the second message as the target mechanism, the first communication apparatus may perform the security establishment by using a mechanism consistent with that of the second communication apparatus. In other words, the second communication apparatus may indicate the target mechanism to the first communication apparatus via the second message. The target mechanism may be indicated explicitly or implicitly. This is not limited in this application.

For example, the second message is a first message that is from the second communication apparatus and that is received by the first communication apparatus after the first communication apparatus sends the at least one request message. In other words, the first communication apparatus does not receive another message after sending the at least one request message and before receiving the first message.

Optionally, the second message is a direct security mode command message, and the direct security mode command message indicates the security establishment mechanism with network assistance. The determining a mechanism indicated by the second message as a target mechanism includes: determining the security establishment mechanism with network assistance indicated by the direct security mode command message as the target mechanism.

Optionally, the second message is a direct authentication and key establishment message, and the direct authentication and key establishment message indicates the security establishment mechanism without network assistance. The determining a mechanism indicated by the second message as a target mechanism includes: determining the security establishment mechanism without network assistance indicated by the direct authentication and key establishment message as the target mechanism.

Further, the receiving a second message from a second communication apparatus includes: receiving a plurality of second messages from a plurality of second communication apparatuses; and the determining a mechanism indicated by the second message as a target mechanism includes: determining, according to a mechanism selection rule, a mechanism indicated by one of the plurality of second messages as the target mechanism.

The first communication apparatus may send the at least one request message in a broadcast manner, and there may be one or more second communication apparatuses that receive the at least one request message. Therefore, the first communication apparatus may receive a plurality of second messages. In this case, the first communication apparatus may determine the target mechanism based on the plurality of second messages.

Because mechanisms respectively indicated by the plurality of second messages may be the same or may be different, a plurality of mechanisms may be determined based on the plurality of second messages. The first communication apparatus may determine the target mechanism according to the mechanism selection rule. The mechanism selection rule may include but is not limited to the rules described above with reference to the first aspect to the third aspect. For details, refer to the foregoing descriptions. Details are not described herein again.

According to a fifth aspect, a security establishment method is provided. The method may be applied to a second communication apparatus, and the second communication apparatus may be a communication apparatus that receives a request message from a first communication apparatus. The second communication apparatus may be UE, or may be a component (for example, a chip, a chip system, or a processor) configured in the UE, or may be a logic module, software, or the like that can implement all or some functions of the second communication apparatus.

For example, the method includes: receiving at least one request message from the first communication apparatus, where the at least one request message indicates a plurality of mechanisms, and the plurality of mechanisms include a security establishment mechanism with network assistance and a security establishment mechanism without network assistance; and sending a second message to the first communication apparatus based on a network coverage status, where the second message indicates to perform security establishment with the first communication apparatus by using one of the plurality of mechanisms.

Based on the foregoing mechanism, the first communication apparatus sends the at least one request message indicating the plurality of mechanisms, so that the second communication apparatus that receives the at least one request message can select one mechanism from the plurality of mechanisms to perform the security establishment with the first communication apparatus. The plurality of mechanisms include the security establishment mechanism with network assistance and the security establishment mechanism without network assistance. Different cases are considered, and an implementable mechanism is provided for both a case in which the second communication apparatus is in network coverage and a case in which the second communication apparatus is not in network coverage. Therefore, the second communication apparatus may select one of the plurality of mechanisms based on a network coverage status, and indicate the mechanism to the first communication apparatus via the second message. In this way, the two parties can perform the security establishment. This mechanism does not require a plurality of negotiations between the first communication apparatus and the second communication apparatus, and therefore helps to complete security establishment more quickly.

With reference to the fifth aspect, in some possible implementations of the fifth aspect, the network coverage status is being in network coverage, and the second message indicates to perform the security establishment with the first communication apparatus by using the security establishment mechanism with network assistance.

Optionally, the second message is a direct security mode command message.

With reference to the fifth aspect, in some possible implementations of the fifth aspect, the network coverage status is not being in network coverage, and the second message indicates to perform the security establishment with the first communication apparatus by using the security establishment mechanism without network assistance.

Optionally, the first message is a direct authentication and key establishment message.

With reference to the fourth aspect or the fifth aspect, in some possible implementations, the at least one request message includes a plurality of request messages, and each of the plurality of request messages indicates one of the plurality of mechanisms.

In other words, each request message indicates one mechanism, and the plurality of mechanisms may be indicated via the plurality of request messages.

With reference to the fourth aspect or the fifth aspect, in some possible implementations, the at least one request message is one request message, and the request message indicates the plurality of mechanisms.

In other words, the plurality of mechanisms may be indicated via one request message. In this case, information elements in the request message may not only include an information element corresponding to the mechanism with network assistance, but also include an information element corresponding to the mechanism without network assistance.

Optionally, the request message includes key_est_info and at least one of the following: a CP-PRUK ID, a UP-PRUK ID, or an SUCI.

As described above, information elements in a request message corresponding to the mechanism with network assistance include a UTC-based counter LSB and an RSC, and information elements in a request message corresponding to the mechanism without network assistance include a ProSe identifier. Therefore, in this mechanism, when one request message indicates the plurality of mechanisms, the request message may include the plurality of information elements.

With reference to the foregoing aspects, in some possible implementations, the first communication apparatus is first UE, the second communication apparatus is relay UE between the first UE and second UE, and the second UE is UE that performs the proximity-based service communication with the first UE.

In other words, after the security establishment is completed, the second communication apparatus may serve as relay UE between the first UE that performs the proximity-based service communication and another UE (for example, third UE). In other words, the mechanism may be applied to a U2U relay service scenario. It should be noted that, the relay UE may be considered as a potential relay before establishing a secure connection with the first UE.

In the U2U relay service scenario, although the relay UE may be in network coverage, or may not be in network coverage, this application provides the plurality of mechanisms, including the security establishment mechanism with network assistance and the security establishment mechanism without network assistance, to provide different security establishment mechanisms for relay UEs in different network statuses. This facilitates successful establishment of the secure connection.

According to a sixth aspect, a communication apparatus is provided, to implement the security establishment method in any one of the first to the fifth aspects and the possible implementations of the first to the fifth aspects. The apparatus includes one or more corresponding functional units or modules configured to perform the foregoing method. The functional unit or module included in the apparatus may be implemented by software and/or hardware.

According to a seventh aspect, this application provides a communication apparatus, including a processor, where the processor is configured to perform the security establishment method in any one of the first to the fifth aspects and the possible implementations of the first to the fifth aspects.

Optionally, the apparatus may further include a memory, configured to store instructions and data. The memory is coupled to the processor. When the processor executes the instructions stored in the memory, the method described in the foregoing aspects may be implemented.

Optionally, the apparatus may further include a communication interface. The communication interface is used by the apparatus to communicate with another device. For example, the communication interface may be a transceiver, a circuit, a bus, a module, or another type of communication interface.

According to an eighth aspect, this application provides a chip system. The chip system includes at least one processor, configured to support implementation of a function in any one of the first to the fifth aspects and the possible implementations of the first to the fifth aspects, for example, receiving or processing of data and/or information in the foregoing method.

In a possible design, the chip system further includes a memory, the memory is configured to store program instructions and data, and the memory is located inside or outside the processor.

The chip system may include a chip, or may include a chip and another discrete component.

According to a ninth aspect, this application provides a computer-readable storage medium, including a computer program. When the computer program is run on a computer, the computer is enabled to implement the method in any one of the first to the fifth aspects and the possible implementations of the first to the fifth aspects.

According to a tenth aspect, this application provides a computer program product, and the computer program product includes a computer program (which may also be referred to as code or an instruction). When the computer program is run, a computer is enabled to perform the method in any one of the first to the fifth aspects and the possible implementations of the first to the fifth aspects.

According to an eleventh aspect, an embodiment of this application provides a communication system, including the foregoing first communication apparatus, the second communication apparatus, the PCF, and/or the foregoing another apparatus (for example, UDM).

It should be understood that, technical mechanisms of the sixth aspect to the eleventh aspect of this application correspond to technical mechanisms of the first aspect to the fifth aspect of this application, and beneficial effects achieved in the aspects and corresponding feasible implementations are similar. Details are not described again.

### BRIEF DESCRIPTION OF DRAWINGS

FIG. 1 is a diagram of a scenario applicable to a security establishment method according to an embodiment of this application;
FIG. 2 is a schematic flowchart of a security establishment method according to an embodiment of this application;
FIG. 3 is a schematic flowchart of a security establishment method according to another embodiment of this application;
FIG. 4 and FIG. 5 are block diagrams of a communication apparatus according to an embodiment of this application; and
FIG. 6 is a diagram of a structure of a terminal device according to an embodiment of this application.

### DESCRIPTION OF EMBODIMENTS

The following describes technical mechanisms in this application with reference to accompanying drawings.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, a "first communication apparatus" and a "second communication apparatus" are merely different communication apparatuses, and a quantity or a priority relationship of communication apparatuses is not limited. For another example, a "first message" and a "second message" are merely different messages, and there is no time sequence, size, or priority relationship between the two messages.

Second, a message mentioned in embodiments of this application, for example, a DCR message, a direct security mode command message, a direct authentication and key establishment message, and an information element (information element, IE) included in each message, is merely an example, and shall not constitute any limitation on this application. This application does not exclude a possibility of replacing the foregoing message with another message to implement a same or similar function.

Third, "sending" and "receiving" in embodiments of this application indicate a signal transfer direction. For example, "sending information to UE 2" may be understood as that a target end of the information is the UE 2, and may include direct sending through an air interface, or include indirect sending through an air interface by another unit or module. "Receiving configuration information from charging energy" may be understood as that a source end of the configuration information is the UE 2, and may include direct receiving from the UE 2 through an air interface, or may include indirect receiving from the UE 2 through an air interface from another unit or module. "Sending" may also be understood as "outputting" of a chip interface, and "receiving" may also be understood as "inputting" of the chip interface.

In other words, "sending" and "receiving" may be performed between devices, for example, between the UE 2 and UE 1; or may be performed in a device, for example, sending or receiving is performed between components, modules, chips, software modules, or hardware modules in the device through a bus, a cabling, or an interface.

It may be understood that, necessary processing, such as encoding and modulation, may be performed on information between a source end and a target end to which the information is sent, but the target end may understand valid information from the source end. Similar descriptions in this application may be understood similarly. Details are not described again.

Fourth, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Fifth, predefinition in this application may be understood as definition, predefinition, storage, prestorage, pre-negotiation, pre-configuration, solidifying, or pre-burning.

Sixth, storage in this application may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Seventh, in embodiments of this application, descriptions such as "when", "in a case", and "if" mean that a communication apparatus (for example, the UE 1 or the UE 2) performs corresponding processing in an objective situation, are not intended to limit time, do not require the communication apparatus (for example, the UE 1 or the UE 2) to perform a determining action during implementation, and do not mean any other limitation.

In addition, "simultaneous" is not a time limitation either. In this specification, "simultaneous" may mean that a plurality of steps may be performed synchronously, or a plurality of information elements may be included in a same message.

The technical mechanisms provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio (new radio, NR) access technology. The 5G mobile communication system may include non-standalone (non-standalone, NSA) networking and/or standalone (standalone, SA) networking.

The technical mechanisms provided in this application may be further applied to a future communication system, for example, a 6th generation (6th generation, 6G) mobile communication system. This is not limited in this application.

A radio access network (radio access network, RAN) device in this application is a device having a wireless transceiver function. The radio access network device may provide a wireless communication function service, and may connect a terminal to a wireless network. The radio access network device may be a node in a radio access network, referred to as a RAN node for short.

In a possible scenario, the RAN node may be a base station (base station, BS), an evolved NodeB (evolved NodeB, eNodeB), a transmission reception point (transmission reception point, TRP), a home NodeB (home evolved NodeB, or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation NodeB in a 6G mobile communication system, a NodeB in a future mobile communication system, or the like. Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, or an Internet of things (Internet of things, IoT) communication system. Alternatively, the RAN node may be a RAN node in a non-terrestrial network (non-terrestrial network, NTN). In other words, the RAN node may be deployed on a high-altitude platform or a satellite. The RAN node may be a macro base station, or may be a micro base station or an indoor base station, or may be a relay node or a donor node, or may be a radio controller in a cloud radio access network (cloud radio access network, CRAN) scenario or a node in an open radio access network (open radio access network, O-RAN or ORAN) scenario. Optionally, the RAN node may alternatively be a server, a wearable device, a vehicle, a vehicle-mounted device, or the like. For example, a RAN node in a V2X technology may be a road side unit (road side unit, RSU). Certainly, the RAN node may alternatively be a node in a core network.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any unit in the CU (or the CU-CP or the CU-UP), the DU, and the RU may be implemented by using a software module, a hardware module, or a combination of a software module and a hardware module.

User equipment (user equipment, UE) in this application may also be referred to as a terminal device, an access terminal, a subscriber unit, a subscriber station, a mobile station, a mobile console, a remote station, a remote terminal, mobile equipment (mobile equipment, ME), a user terminal, a terminal, a wireless communication device, a user agent, or a user apparatus.

The UE may be a device that provides a voice/data connectivity for a user, for example, a handheld device, a vehicle-mounted device, or the like with a wireless connection function. Currently, some examples of the UE may be a mobile phone (mobile phone), a tablet computer (pad), a computer (for example, a notebook computer or a palmtop computer) with a wireless transceiver function, a mobile Internet device (mobile Internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle (uncrewed aerial vehicle, UAV), a wireless terminal in V2X, a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of the user. The wearable device is not merely a hardware device, but is used to implement a powerful function through software support, data exchange, and cloud interaction. Generic wearable smart devices include full-featured and large-size devices that can implement complete or partial functions without depending on smartphones, for example, smart watches or smart glasses, and devices that focus only on a type of application function and need to work with other devices such as smartphones, for example, various smart bands or smart jewelry for monitoring physical symptoms.

In addition, the UE may further include a terminal device in the IoT system, which may also be referred to as an IoT node. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

The UE may further include a sensor like an intelligent printer, a train detector, or a gas station. Main functions of the UE include collecting data (for some terminal devices), receiving control information and downlink data from a network device, sending an electromagnetic wave, and transmitting uplink data to the network device.

It should be understood that, specific forms of the network device and the UE are not limited in this application.

To facilitate understanding of embodiments of this application, the following first briefly describes terms used in this specification.
1. D2D communication: Communication devices (such as UEs) may share spectrum resources under control of a cell network to perform D2D communication, to improve utilization of the spectrum resources; or may not perform communication by using unlicensed spectrum resources under control of the cell network. In D2D communication, the communication devices may communicate with each other through a PC5 interface, and information about a control plane and a user plane may be transmitted between the UEs through the PC5 interface. The information includes signalling and/or data. A link on which the UE directly performs direct communication through the PC5 interface may be referred to as a sidelink (sidelink, SL). One-to-one communication (one-to-one communication) and one-to-many communication (one-to-many communication) may be included. The one-to-one communication may correspond to unicast communication, and the one-to-many communication may correspond to multicast communication and broadcast communication. In the one-to-one communication, if an initiator and a receiver are in a short-distance range, the initiator and the receiver may directly communicate with each other via mutual discovery (discovery).
2. ProSe communication: The D2D communication has been widely discussed in LTE and 5G network standards, and is collectively referred to as ProSe communication. For example, in 5G, 5G ProSe direct communication (5G ProSe Direct Communication) is defined as follows: Communication is performed between two or more adjacent UEs supporting ProSe communication through user plane transmission using an NR technology via a path not traversing any network node.

UEs that perform ProSe communication may communicate with each other through the PC5 interface, and information about a control plane and a user plane may be transmitted between the UEs through the PC5 interface. The information includes signalling and/or data. A link on which the UE directly performs direct communication through the PC5 interface may also be referred to as a sidelink (sidelink), or referred to as a PC5 link (PC5 link). Unicast communication performed via the PC5 link may also be referred to as PC5 unicast communication (PC5 unicast communication), and the PC5 link used for unicast communication may also be referred to as a PC5 unicast link (PC5 unicast link).

Compared with conventional cellular network communication, UE used for ProSe communication needs to have a ProSe function, and UEs having the ProSe function communicate with each other through the PC5 interface. In 5G, UEs having the ProSe function and performing ProSe communication may be referred to as source UE (source UE) and target UE (target UE), or may be collectively referred to as end UEs (end UEs). The source UE and the target UE may communicate with each other with assistance of a U2U relay. The U2U relay may be understood as UE that provides a function of supporting a connection between the source UE and the target UE. In this specification, a service in which the end UEs perform ProSe communication via the U2U relay may be referred to as a U2U relay service.

It should be additionally noted that, in a process of establishing the PC5 link used for ProSe communication, UE having the ProSe function needs to initiate PC5 link establishment to another UE having the ProSe function, and in this case, roles of the two UEs may be distinguished as initiating UE (initiating UE) and receiving UE (receiving UE). For example, if the end UE initiates PC5 link establishment to the U2U relay, the end UE and the U2U relay are respectively initiating UE and receiving UE; or if the end UE initiates PC5 link establishment to other end UE, the end UE and the other end UE are respectively initiating UE and receiving UE.

3. Network coverage status: For ease of description, the network coverage status is introduced in this specification to distinguish statuses of different UEs. The network coverage status may include: being in network coverage (in-coverage) and not being in network coverage (or out of network coverage (out-of-coverage)).

Being in network coverage may mean being in coverage of a base station and being capable of successfully establishing a connection to a network. Correspondingly, not being in network coverage may mean not being capable of successfully establishing a connection to the network, for example, being out of coverage of a base station, or being in coverage of the base station but not being capable of successfully establishing a connection to the network due to reasons such as an excessive quantity of users accessing the network leads to weak signal quality. In other words, the network coverage status may be used to determine whether the UE can successfully establish a connection to the network.

4. RSC: The RSC may be used to identify different services. In other words, different RSCs may correspond to different services. For example, a ProSe communication service A may correspond to an RSC. For example, if a device (for example, denoted as a device A) expects to perform a ProSe communication service A1 via a UE-to-network U2U relay, the ProSe communication service A1 may correspond to an RSC (for example, denoted as an RSC#1); or if the device A expects to perform a ProSe communication service A2 via a U2U relay, the ProSe communication service A2 may correspond to another RSC (for example, denoted as an RSC#2). The device A may broadcast, in a discovery procedure, an RSC (for example, the RSC#2) corresponding to a service that is expected to be initiated, and a device (for example, denoted as a device B) that receives the RSC#2 may determine that the device A expects to perform ProSe communication via the U2U relay.

5. Security establishment (security establishment): An objective of security establishment is to establish a secure connection between communication apparatuses, thereby ensuring communication security. The security establishment procedure is briefly described below.

In PC5 unicast communication, the initiating UE and the receiving UE perform security establishment in a PC5 link establishment process, including determining, through negotiation, whether security of the PC5 link is enabled (that is, determining a manner of security protection between the two ends), and further performing mutual authentication and key establishment. It should be noted that the initiating UE and the receiving UE may negotiate via a control plane message (or referred to as a signalling message (signalling message)). For example, the initiating UE may send a direct communication request (DCR) message to the receiving UE to trigger establishment of a PC5 unicast link, and after receiving the direct communication request message from the initiating UE, the receiving UE may trigger a security establishment procedure for the PC5 unicast link. The procedure is used to perform mutual authentication and mutual authorization between the initiating UE and the receiving UE, and establish a shared key for the PC5 unicast link. The security establishment method provided in this application may include a security establishment method with network assistance and a security establishment method without network assistance. A security establishment mechanism with network assistance may also be referred to as an in-coverage mechanism, and a security establishment mechanism without network assistance may also be referred to as an out-of-coverage mechanism.

6. Security establishment mechanism with network assistance: The security establishment mechanism with network assistance is a mechanism in which a network side performs security authentication, authorization, and key establishment. In a security establishment procedure with network assistance, interaction with the network side is required to complete security establishment.

The security establishment mechanism with network assistance may further include a user plane-based mechanism (UP-based solution) and a control plane-based mechanism (CP-based solution). The user plane-based mechanism may be referred to as a user plane mechanism or a UP mechanism for short, and the control plane-based mechanism may be referred to as a control plane mechanism or a CP mechanism for short. Further, a correspondence between an RSC and a control plane security mechanism indicator (Control Plane Security Indicator) is configured on UE. The correspondence may indicate whether security establishment is performed via the control plane mechanism. In other words, the UE may further determine, based on the RSC and the correspondence, whether the RSC corresponds to the control plane mechanism or the user plane mechanism.

The CP mechanism is a mechanism in which a relay connection key is obtained via a control plane of a network. For example, when the initiating UE needs to establish the PC5 link to the receiving UE, the initiating UE may perform ProSe discovery to discover the receiving UE. The initiating UE may send the direct communication request message to the receiving UE, to initiate establishment of the PC5 link. In the CP mechanism, the direct communication request message may include an SUCI of the initiating UE and a relay service code (relay service code, RSC) of a service corresponding to the PC5 communication link. The receiving UE may send a key obtaining request message to an access and mobility management function (access and mobility management function, AMF) based on the direct communication request message, so that the AMF verifies that the receiving UE has permission to use the ProSe service. After verifying that the receiving UE has permission to use the service, the AMF may send an authentication request message to an AUSF. The authentication server function (authentication server function, AUSF) may obtain an authentication vector from unified data management (unified data management, UDM) based on the authentication request message, to perform ProSe authentication on the initiating UE. When the ProSe authentication succeeds, the initiating UE and the AUSF separately generate a CP-PRUK and a CP-PRUK ID. The CP-PRUK is a root key of the PC5 link in the CP mechanism, and the CP-PRUK ID is an identifier of the root key. The AUSF may generate a K_{NR_ProSe} based on the CP-PRUK, and send the K_{NR_ProSe} to the receiving UE. The K_{NR_ProSe} may be a key of the PC5 link in the CP mechanism. The initiating UE may generate a K_{NR_ProSe} based on the CP-PRUK. In this case, both the initiating UE and the receiving UE obtain the K_{NR_ProSe}, and the two parties may use the K_{NR_ProSe} to establish a secure PC5 connection.

The AUSF may further store the CP-PRUK, the CP-PRUK ID, the RSC of the service corresponding to the PC5 link, and a subscription permanent identifier (subscription permanent identifier, SUPI) of the initiating UE in a ProSe anchor function (ProSe anchor function, PAnF). The initiating UE may further send the direct communication request message to other receiving UE again. In this case, in the CP mechanism, the direct communication request message may further include the CP-PRUK ID, to indicate that the initiating UE has performed a ProSe authentication procedure before. The AUSF may directly obtain, based on the CP-PRUK ID and the RSC of the service, the corresponding CP-PRUK from the PAnF, and does not need to perform the ProSe authentication procedure again.

It may be understood that, for a specific procedure of the CP mechanism, refer to related descriptions in the 3rd Generation Partnership Project (3rd Generation Partnership Project, 3GPP) technical specification (technical specification, TS) 33.503. Details are not described again.

The UP mechanism is a mechanism in which a relay connection key is obtained via a user plane of the network. For example, a ProSe key management function (ProSe key management function, PKMF) of the initiating UE and a PKMF address of the receiving UE are separately preconfigured for the initiating UE and the receiving UE. The initiating UE may obtain a UP-PRUK and a UP-PRUK ID from the PKMF of the initiating UE via UP signalling. The UP-PRUK is a root key of the PC5 link in the UP mechanism, and the UP-PRUK ID is an identifier of the root key. When the initiating UE needs to access the network via a relay, the initiating UE may perform ProSe discovery to discover the receiving UE. The initiating UE may send the direct communication request message to the receiving UE, to initiate establishment of the PC5 link. In the UP mechanism, the direct communication request message may include: an identifier of a home public land mobile network (home public land mobile network, HPLMN) of the initiating UE, for example, an HPLMN ID, and the SUCI of the initiating UE (the SUCI of the initiating UE may also be replaced with the UP-PRUK ID). The receiving UE may send a key obtaining request message to the PKMF of the receiving UE based on the direct communication request message, so that the PKMF of the receiving UE verifies that the receiving UE has permission to use the service. In this case, the PKMF of the receiving UE may determine the PKMF of the initiating UE based on the HPLMN ID of the initiating UE and the SUCI of the initiating UE (the SUCI of the initiating UE may also be replaced with the UP-PRUK ID), and obtain a K_{NRP} (new radio PC5, NRP) and a K_{NRP} freshness parameter (K_{NRP} freshness parameter) from the PKMF of the initiating UE. The PKMF of the receiving UE sends the K_{NRP} and the K_{NRP} freshness parameter to the receiving UE. The K_{NRP} may be a key of the PC5 link in the UP mechanism. After obtaining the K_{NRP}, the receiving UE sends the K_{NRP} freshness parameter to the initiating UE, and the initiating UE determines the K_{NRP} based on the UP-PRUK and the K_{NRP} freshness parameter. In this case, both the initiating UE and the receiving UE obtain the K_{NRP}, and the two parties may use the K_{NRP} to establish a secure PC5 connection.

It may be understood that, for a specific procedure of the UP mechanism, refer to related descriptions in 3GPP TS 33.503. Details are not described again.

Because the network side can learn in real time whether a communication apparatus that needs to perform security establishment is a subscriber and whether the communication apparatus has the permission to use the service, an unauthorized user or a user whose authorization expires can be prevented from obtaining authorization. Because the network side participates in security establishment, each time security establishment is performed, the network device may determine, based on latest subscription information, whether to authorize the communication apparatus. Therefore, authorization may change with an update of subscription information, and the authorization may be considered as dynamic authorization. In addition, because the network side participates in security establishment, there is a large amount of signalling exchanged between the communication apparatus and the network device. Especially in the user plane-based mechanism, a protocol data unit (protocol data unit, PDU) session further needs to be established, and authorization takes longer time.

7. Security establishment mechanism without network assistance: Compared with the security establishment mechanism with network assistance, the security establishment mechanism without network assistance does not require the network side to perform authentication, authorization, and key establishment, and mutual authentication and key establishment may be performed between devices.

In the security establishment mechanism without network assistance, long term credential (long term credential) information is preconfigured in the initiating UE and the receiving UE, is used as a root credential of a specific PC5 unicast communication service, and serves as the root credential in a security establishment procedure in a PC5 unicast establishment procedure to further generate a root key of the PC5 unicast link. When the initiating UE determines that the PC5 unicast link needs to be established for a specific service, the initiating UE sends the direct communication request message to the receiving UE. Correspondingly, the receiving UE 2 receives the direct communication request message from the transmitting UE 1. The direct communication request message may include information (Key_Est_Info) required for key establishment. For example, the information required for key establishment may be an information container (container), used to carry the information required for key establishment. The initiating UE and the receiving UE may exchange the Key_Est_Info a plurality of times to complete a mutual authentication and key establishment procedure, to obtain the root key K_{NRP} of the PC5 unicast link.

Optionally, the direct communication request message may further include a root key identifier (K_{NRP} ID), the K_{NRP} ID identifies the root key K_{NRP}, and the K_{NRP} may be a shared key established in a previous mutual authentication and key establishment procedure between the initiating UE and the receiving UE. If the initiating UE can sense an identity of the receiving UE and the initiating UE stores a part of context information between the initiating UE and the receiving UE, the direct communication request message may further include the K_{NRP} ID. Further, a previously obtained key may be directly used, without using the Key _Est_Info to negotiate to obtain a key again.

When performing security establishment without network assistance, the communication apparatus needs to perform mutual authentication with a peer communication apparatus to obtain authorization from the peer end. However, because security establishment can be completed without participation of the network side, signalling interaction is small, and flexibility is high. In addition, once the two communication apparatuses complete mutual authentication and authorization, it may be considered that the peer end is trusted. Because the communication apparatus does not interact with the network device, the communication apparatus may not obtain the latest subscription information, and the authorization may not change in a long period of time after the authorization is obtained. Therefore, the authorization may be considered as static authorization.

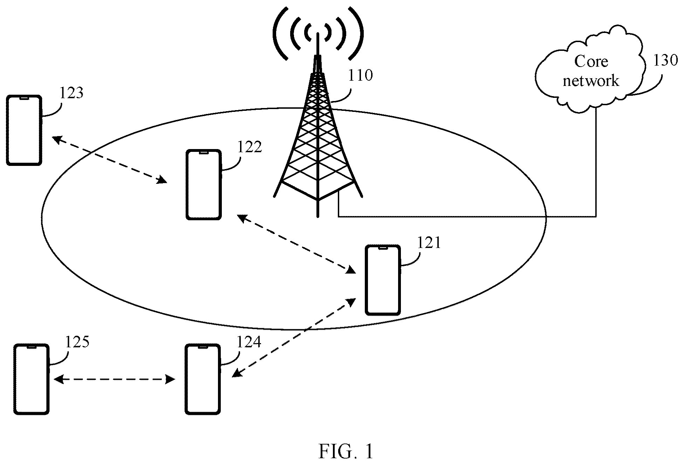

FIG. 1 is a diagram of a ProSe communication scenario applicable to a security establishment method according to this application. The scenario illustrates an access network device 110, a plurality of UEs 121 to 125, and a core network 130.

The core network 130 may include a plurality of network elements with different functions, to implement different functions. For example, the core network 110 may include but is not limited to network elements such as an access and mobility management function (access and mobility management function, AMF), a session management function (session management function, SMF), a user plane function (user plane function, UPF), a policy control function (policy control function, PCF), and unified data management (unified data management, UDM). The network elements may be configured to implement respective functions. For example, the AMF may be configured to perform mobility management and access management. The SMF may be configured to manage a session, allocate and manage an Internet protocol (Internet protocol, IP) address of a terminal device, select and manage a termination point of a user plane function, a policy control, or a charging function interface, notify downlink data, and the like. The UPF may be configured to perform packet routing and forwarding, perform quality of service (quality of service, QoS) processing on user plane data, or the like. The PCF may be configured to provide guidance on a unified policy framework for network behavior, provide policy rule information for a control plane function (for example, the AMF or the SMF) network element, and the like. The UDM may be configured to store user data such as subscription information and authentication/authorization information. A specific network element included in the core network 120 and a function, a quantity, and a form of the network element are not limited in this application.

The access network device 110 is connected to the core network 130, and may be configured to: provide a network access function for an authorized terminal in coverage, manage radio resources, and complete forwarding of a control signal and user data between the terminal device and the core network 130. As shown in the figure, it is assumed that authorized terminals UE 121 and UE 122 are in coverage of the access network device 110, and can successfully establish a connection to a network. The UE 123 to the UE 125 are out of coverage of the access network device 110, and cannot successfully establish a connection to the network.

Communication between the UE 121 and the UE 122, between the UE 121 and the UE 124, between the UE 122 and the UE 123, and between the UE 124 and the UE 125 may be performed through a PC5 interface. If the UE 121 expects to communicate with the UE 123 through the PC5 interface, but the UE 121 is far away from the UE 123, and the UE 123 is out of signal coverage of the UE 121, or communication quality is poor, the UE 121 may use the UE 122 to assist in communication. In this case, the UE 122 is relay UE, namely, an example of the foregoing U2U relay, between the UE 121 and the UE 123, the UE 121 is an example of source UE, and the UE 123 is an example of the target UE. If the UE 121 expects to communicate with the UE 125 through the PC5 interface, but the UE 121 is far away from the UE 125, and the UE 125 is out of signal coverage of the UE 121, or communication quality is poor, the UE 121 may use the UE 124 to assist in communication. In this case, the UE 124 is relay UE, namely, another example of the foregoing U2U relay, between the UE 121 and the UE 125, the UE 121 is an example of the source UE, and the UE 125 is another example of the target UE.

The UE 122 is in coverage of the access network device 110, and can successfully establish a connection to the network; and the UE 124 is out of coverage of the access network device 110, and cannot successfully establish a connection to the network. However, a security establishment mechanism supported by the relay UE varies with a network coverage status of the relay UE.

To ensure communication security, in the figure, a secure connection needs to be established between the UE 121 and the UE 122, between the UE 122 and the UE 123, between the UE 121 and the UE 124, and between the UE 124 and the UE 125. However, in a U2U relay scenario, how to perform security establishment between end UE and the relay UE is not specified in a conventional technical standard. Therefore, how to perform the security establishment between the end UE and the relay UE is still an urgent technical problem to be resolved.

In view of this, this application provides a method, to provide a plurality of optional security establishment mechanisms for end UEs that use a ProSe for communication, so as to adapt to different network coverage statuses of the relay UE. In this way, regardless of whether the relay UE is in network coverage or is not in network coverage, a security establishment mechanism may be adapted, to complete security establishment between the relay UE and the end UE, thereby ensuring security of ProSe communication.

It may be understood that, although the method provided in this application is provided for security establishment between source UE and relay UE for ProSe communication in a U2U relay service, this should not constitute any limitation on an application scope of the method. For example, after the security establishment between the source UE and the relay UE for the ProSe communication is completed, the relay UE may further perform security establishment with target UE for the ProSe communication. In this case, the relay UE may also use a method provided below to perform the security establishment with the target UE. For ease of understanding and description, the following describes the method provided in this application by using the security establishment between the source UE and the relay UE for the ProSe communication as an example.

The following describes in detail the security establishment method provided in this application with reference to the accompanying drawings.

It should be noted that the following plurality of embodiments describe each procedure from a perspective of device interaction. The devices are merely examples, and shall not constitute any limitation on this application. For example, UE 1 may be an example of a first communication apparatus, and a component (for example, a chip, a chip system, a processor, or another logic module or software that can be configured to implement some or all functions of the UE 1) configured in the UE 1 may be another example of the first communication apparatus. UE 2 may be an example of a second communication apparatus, and a component (for example, a chip, a chip system, a processor, or another logic module or software that can be configured to implement some or all functions of the UE 2) configured in the UE 2 may be another example of the second communication apparatus.

The UE 1 may be first UE that initiates ProSe communication, for example, may correspond to the UE 121 in FIG. 1. The UE 2 may be potential (potential) relay UE determined by the UE 1, for example, may correspond to the UE 122 or the UE 124 in FIG. 1. In other words, the UE 1 expects to perform security establishment with the UE 2, and then the UE 2 assists the UE 1 in performing ProSe communication with second UE (for example, UE 3), for example, corresponding to the UE 123 or the UE 125 in FIG. 1.

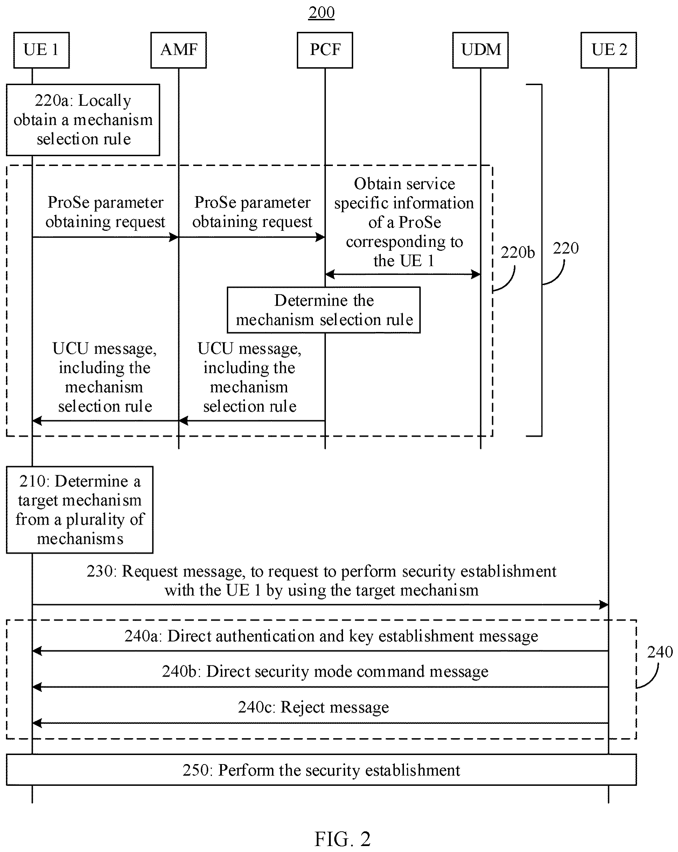

FIG. 2 is a schematic flowchart of a security establishment method according to an embodiment of this application. In the procedure shown in FIG. 2, end UE actively selects a mechanism, and further determines, by negotiating with relay UE, a mechanism used for security establishment between the end UE and the relay UE.

As shown in FIG. 2, the method 200 includes step 210 to step 250. The following describes the steps in the method 200 in detail.

In step 210, UE 1 determines a target mechanism from a plurality of mechanisms, where the plurality of mechanisms include a security establishment mechanism with network assistance and a security establishment mechanism without network assistance.

When determining that ProSe communication with UE 3 needs to be performed with assistance of relay UE (namely, a U2U relay), the UE 1 may determine the target mechanism from the plurality of mechanisms. The relay UE is denoted as UE 2.

For descriptions of the security establishment mechanism with network assistance (or an in-coverage mechanism) and the security establishment mechanism without network assistance (or an out-of-coverage mechanism), refer to the foregoing related descriptions. Details are not described again. It should be understood that, the security establishment mechanism with network assistance and the security establishment mechanism without network assistance are merely two examples of a security establishment mechanism, and shall not constitute any limitation on this application. This application does not exclude a possibility that the foregoing plurality of mechanisms further include another security establishment mechanism, and does not exclude a possibility that another mechanism that can be used to implement a same or similar mechanism is defined in future technical specifications.

In this embodiment, the mechanism determined by the UE 1 is denoted as the target mechanism. The UE 1 may determine, through negotiation with another communication apparatus (for example, the UE 2), that both parties support the target mechanism, and then performs security establishment by using the target mechanism. Therefore, the target mechanism may change during the negotiation. For ease of differentiation and description, the target mechanism determined by the UE 1 this time is denoted as a mechanism 1 below. The mechanism 1 may be an in-coverage mechanism, an out-of-coverage mechanism, or another security establishment mechanism. This is not limited in this application.

It may be understood that, when determining the target mechanism, the UE 1 may determine the target mechanism with reference to information such as a capability of the UE 1. Therefore, the target mechanism is a mechanism supported by the UE 1.

Optionally, step 210 includes: The UE 1 determines the target mechanism from the plurality of mechanisms according to a mechanism selection rule.

The mechanism selection rule indicates a rule for selecting the target mechanism from the plurality of mechanisms. It should be understood that, the mechanism selection rule is merely a name, and may also be referred to as, for example, a mechanism selection indicator, a selection rule, a selection indicator, or a preset rule. Naming of the mechanism selection rule is not limited in this application, and shall fall within the protection scope of this application provided that a function that is the same as or similar to that of the mechanism selection rule can be implemented.

In a possible design, the mechanism selection rule is a correspondence between ProSe code and a mechanism indicator. In another possible design, the mechanism selection rule is priority information, and the priority information indicates a priority sequence of mechanisms in the plurality of mechanisms. In still another possible design, the mechanism selection rule includes a correspondence between an RSC and a mechanism indicator, and priority information. The following separately describes in detail the correspondence between the RSC and the mechanism indicator, and the priority information.

Correspondence between the ProSe code and the mechanism indicator:
The mechanism indicator may be an indicator used to determine a specific mechanism. To be specific, the mechanism indicator may be used to determine a specific mechanism, or may directly correspond to a specific mechanism. For example, the mechanism indicator may be an identifier of a mechanism, and each mechanism may be indicated by using one identifier. UE may index a specific mechanism based on an identifier of the mechanism. Certainly, the mechanism indicator is not limited to the identifier of the mechanism, and may alternatively be other information that can indicate the mechanism or that can be used to determine the mechanism. This embodiment is subsequently described by using an example in which the mechanism indicator is used to further determine the specific mechanism.

For example, the ProSe code may be an RSC, ProSe application code (ProSe application code), ProSe discovery code (ProSe discovery code), ProSe query code (ProSe query code), ProSe response code (ProSe response code), or the like. This application includes but is not limited thereto. For ease of description, the RSC is subsequently used as an example for description in this embodiment. To be specific, a possible form of the correspondence between the ProSe code and the mechanism indicator is the correspondence between the RSC and the mechanism indicator.

Each RSC may correspond to one or more mechanism indicators, and different RSCs may correspond to a same mechanism indicator or different mechanism indicators. In other words, the mechanism selection rule is a correspondence between one or more RSCs and one or more mechanism indicators, and each mechanism indicator indicates or is used to determine one of the plurality of mechanisms. The RSC may also correspond to a U2U relay service. Different RSCs may correspond to different U2U relay services, or different RSCs may correspond to a same U2U relay service.

In this embodiment, the UE 1 determines to perform the ProSe communication with the UE 3 with the assistance of the relay UE, and the UE 1 determines an RSC (denoted as a first RSC for ease of differentiation) corresponding to the ProSe communication. Further, the UE 1 determines, based on the correspondence between the RSC and the mechanism indicator, a first mechanism indicator corresponding to the first RSC. Because the first mechanism indicator indicates a first mechanism in the foregoing plurality of mechanisms, the UE 1 may further determine the corresponding first mechanism based on the first mechanism indicator. It is assumed that the correspondence between the RSC and the mechanism indicator includes a correspondence between the first RSC and the first mechanism indicator, and the first mechanism indicator is used to determine the first mechanism. In this case, the UE 1 may determine the first mechanism as the target mechanism. It should be noted that, after locally determining to use the U2U relay service, the UE 1 may further determine the first RSC corresponding to the U2U relay service, or the UE 1 may obtain the first RSC from the UE 2 in a discovery procedure of the U2U relay.

It should be noted that, the correspondence between the ProSe code and the mechanism indicator in this mechanism may include a correspondence between the RSC and a control plane security mechanism indicator, or the correspondence between the RSC and the control plane security mechanism indicator may be reused. In other words, the control plane security mechanism indicator indicates whether to perform security establishment by using a control plane mechanism and use the security establishment mechanism with network assistance. Specifically, if the RSC has a corresponding control plane security mechanism indicator, and it is determined, based on the control plane security mechanism indicator, to use the control plane mechanism, it indicates that the control plane mechanism in the security establishment mechanism with network assistance needs to be used; or if the RSC has a corresponding control plane security mechanism indicator, and it is determined, based on the control plane security mechanism indicator, to use a user plane mechanism, it indicates that the user plane mechanism in the security establishment mechanism with network assistance needs to be used. Optionally, if the RSC does not have a corresponding control plane security mechanism indicator, it indicates that the security establishment mechanism without network assistance needs to be used. The correspondence between the ProSe code and the mechanism indicator may alternatively not include the correspondence between the RSC and the control plane security mechanism indicator, and the correspondence between the ProSe code and the mechanism indicator and the correspondence between the RSC and the control plane security mechanism indicator are independent of each other. This is not limited in this application.

Optionally, in an implementation, in the correspondence between the ProSe code and the mechanism indicator in this mechanism, the mechanism indicator may be an in-coverage indicator indicating that the security establishment mechanism with network assistance needs to be used. Specifically, if the RSC has a corresponding in-coverage indicator, it indicates that the security establishment mechanism with network assistance needs to be used; or if the RSC does not have a corresponding in-coverage indicator, it indicates that the security establishment mechanism without network assistance needs to be used.

Optionally, in another implementation, in the correspondence between the ProSe code and the mechanism indicator in this mechanism, the mechanism indicator may be an out-of-coverage indicator indicating that the security establishment mechanism without network assistance needs to be used. Specifically, if the RSC has a corresponding out-of-coverage indicator, it indicates that the security establishment mechanism without network assistance needs to be used; or if the RSC does not have a corresponding out-of-coverage indicator, it indicates that the security establishment mechanism without network assistance needs to be used.

Priority information: The foregoing plurality of mechanisms may separately correspond to different priorities. For example, a priority of the in-coverage mechanism is higher than a priority of the out-of-coverage mechanism. For another example, a priority of the out-of-coverage mechanism is higher than a priority of the in-coverage mechanism. This is not limited in this application.

In a possible implementation, the priority information may include, for example, an indicator of a priority of each mechanism. For example, a priority of each mechanism may be indicated by using different priority values. For example, a higher priority value indicates a higher priority, or a lower priority value indicates a higher priority. For example, the priority information may be a priority value table, and the priority value table records a priority value of each mechanism.

In another possible implementation, the priority sequence of the mechanisms may be reflected by rankings of the mechanisms in the plurality of mechanisms. For example, a mechanism with a higher ranking has a higher priority, or a mechanism with a lower ranking has a higher priority. For example, the priority information may be a priority ranking table, and the plurality of mechanisms may be ranked in the table in descending order of priorities.

In still another possible implementation, the priority information may include an indicator of a default mechanism. The default mechanism is a mechanism that is preferentially selected. Therefore, indicating the default mechanism is equivalent to implicitly indicating a mechanism with the highest priority. When the plurality of mechanisms include the foregoing in-coverage mechanism and out-of-coverage mechanism, a priority sequence of the two mechanisms is indicated by indicating the default mechanism. If the plurality of mechanisms further include more other mechanisms, the mechanism with the highest priority is indicated by indicating the default mechanism, and the other mechanisms may be considered as mechanisms with a same priority.

The UE 1 may select, based on the priority information, the mechanism with the highest priority in the plurality of mechanisms as the target mechanism.

The foregoing correspondence between the RSC and the mechanism indicator and the priority information may be used separately or in combination. For example, the first RSC corresponding to the ProSe communication may correspond to a plurality of mechanism indicators, in other words, the first RSC corresponds to a plurality of mechanism indicators, and the plurality of mechanism indicators are used to determine a plurality of first mechanisms. In this case, the UE 1 may further determine, with reference to the priority information, a mechanism from the plurality of first mechanisms as the target mechanism.

In another possible implementation, the UE 1 determines the target mechanism based on preconfigured information, where the preconfigured information indicates the target mechanism that is used by the UE 1 by default. It may be understood that, target mechanisms indicated by preconfigured information on different UEs may be different mechanisms or may be a same mechanism.

Optionally, before step 210, the method further includes step 220: The UE 1 obtains the mechanism selection rule.

Step 220 may further include the following steps:
step 220a: The UE 1 locally obtains the mechanism selection rule; and/or
step 220b: The UE 1 obtains the mechanism selection rule from a core network, where for example, the UE 1 obtains the mechanism selection rule from a PCF, and the PCF is used as an example for description in the following.

In step 220a, the mechanism selection rule locally obtained by the UE 1 may be prestored in a subscriber identity module (subscriber identity module, SIM) of the UE 1, or may be preset in a device before delivery.

In step 220b, the UE 1 may obtain the mechanism selection rule while obtaining a ProSe parameter from the PCF.

For example, the mechanism selection rule may be determined by the PCF based on an indicator of the mechanism selection rule. The indicator of the mechanism selection rule may be understood as information used to determine the mechanism selection rule. For example, the information may be the priority information and/or the foregoing correspondence between the RSC and the mechanism indicator, or may be other information used to determine the foregoing correspondence between the RSC and the mechanism indicator and/or the priority information. This is not limited in this application.

In a possible design, the indicator of the mechanism selection rule is included in service specific information (service specific information) of a ProSe of the UE 1, and the PCF may obtain the indicator of the mechanism selection rule by obtaining the service specific information of the ProSe, to further determine the mechanism selection rule. The figure shows an example of a process in which the UE 1 obtains the mechanism selection rule from the PCF. As shown in the figure, the UE 1 may send a ProSe parameter obtaining request to the PCF via an AMF, and the PCF may obtain the service specific information of the ProSe of the UE 1 from UDM based on the request. Optionally, the ProSe parameter obtaining request sent by the AMF to the PCF carries an SUPI of the UE 1, and the PCF may obtain the service specific information of the ProSe of the UE 1 from the UDM based on the SUPI of the UE 1. After obtaining the service specific information of the ProSe, the PCF may determine the mechanism selection rule based on information used to determine the mechanism selection rule in the service specific information, and send the mechanism selection rule to the UE 1. As shown in the figure, the PCF may send the mechanism selection rule to the UE 1 via a UE configuration update (UE configuration update, UCU) procedure. In other words, the mechanism selection rule may be carried in a UCU message.

Optionally, before the AMF sends the ProSe parameter obtaining request to the PCF, the method further includes: The AMF determines that the UE 1 may perform the ProSe communication. For example, the UE 1 may perform the ProSe communication with assistance of the U2U relay, or the U2U relay service may be used.

Optionally, before the PCF sends the mechanism selection rule to the UE 1, the method further includes: The PCF determines that the UE 1 may perform the ProSe communication. For example, the UE 1 may perform the ProSe communication with assistance of the U2U relay, or the U2U relay service may be used.

The UDM stores subscription information of each subscribed UE, for example, subscription information of the UE 1. The subscription information of the UE 1 records whether the UE 1 is a subscriber of the ProSe. It should be understood that, whether UE is a subscriber of the ProSe may be understood as whether the UE has a ProSe function. If the UE is the subscriber, the UE has the ProSe function and can obtain authorization of the ProSe. If the UE is not the subscriber, the UE does not have the ProSe function and cannot obtain the authorization of the ProSe. Further, if the UE 1 is the subscriber of the ProSe, the subscription information further includes the service specific information of the ProSe. If the UE 1 is not the subscriber of the ProSe, the UDM may reply to the PCF with a message, to indicate that the UE 1 does not have the ProSe function. In this case, the UE 1 cannot obtain the mechanism selection rule from the PCF.

It should be understood that, the foregoing example with reference to FIG. 2 is merely a possible design, and shall not constitute any limitation on this application. Alternatively, the indicator of the mechanism selection rule may not be included in the service specific information of the ProSe, for example, may be included in other information of the subscription information of the UE 1, or may not be included in the subscription information of the UE 1. The PCF may alternatively send the mechanism selection rule to the UE 1 via another procedure or message.

The UE 1 may perform step 220a without performing step 220b, or may perform step 220b without performing step 220a, or may perform step 220a and step 220b. When the UE 1 performs step 220a and step 220b, the UE 1 may obtain a plurality of mechanism selection rules. The UE 1 may use the mechanism selection rule according to a preset priority sequence. For example, the preset priority may be that a priority of the mechanism selection rule obtained from the PCF is higher than a priority of the mechanism selection rule locally obtained by the UE 1, and a priority of the mechanism selection rule obtained by the UE 1 from the SIM is higher than a priority of the mechanism selection rule preset by the UE 1 before delivery of the device.

In step 230, the UE 1 sends a request message, where the request message is used to request a communication apparatus that receives the request message to perform security establishment with the UE 1 by using the target mechanism.

In a possible implementation of step 230, the UE 1 sends the request message to the UE 2, to be specific, the UE 1 sends the request message to the UE 2 in a unicast manner.

For example, the UE 1 and the UE 2 may separately discover each other via a discovery procedure. Because the UE 1 expects the relay UE to assist the UE 1 in performing the ProSe communication with the UE 3, the UE 1 may send the foregoing request message to the UE 2 after discovering the UE 2. The request message may be used to request the UE 2 to perform the security establishment with the UE 1 by using the target mechanism. Correspondingly, in step 220, the UE 2 receives the request message.

In another possible implementation of step 230, the UE 1 sends the request message in a broadcast manner. In other words, the UE 1 does not predict a receiver of the request message. There may be one or more communication apparatuses that receive the request message. Correspondingly, in step 220, the one or more communication apparatuses receive the request message. In this embodiment, the one or more communication apparatuses may include the UE 2.

Optionally, before step 230, the method further includes: The UE 1 and the UE 2 execute the discovery procedure.

An example in which the UE 1 and the UE 2 execute the discovery procedure is as follows: The UE 1 and the UE 2 may separately send a broadcast message on a PC5 interface, and the broadcast message carries the first RSC. The first RSC may be a parameter separately obtained by the UE 1 and the UE 2 in a ProSe parameter configuration phase. ProSe parameter configuration processes of the UE 1 and the UE 2 may be respectively performed in processes in which the UE 1 and the UE 2 register with a network, or may be performed after the UE 1 and the UE 2 register with the network. Alternatively, the ProSe parameter may be a default parameter preconfigured in the device. Because broadcast messages of the UE 1 and the UE 2 both carry the first RSC, it indicates that the UE 1 and the UE 2 have the ProSe function and the UE 2 may provide the U2U relay service for the UE 1. Therefore, the UE 1 may determine the UE 2 as potential relay UE. A reason why the UE 2 is referred to as the potential relay UE is that the UE 1 has not established a secure connection to the UE 2 in this case, and the UE 1 cannot communicate with another UE (for example, the UE 3) with assistance of the UE 2.

For a specific process in which the UE 1 and the UE 2 execute the discovery procedure, refer to related descriptions in 3GPP technical specifications. Details are not described in this specification.

It should be understood that, the discovery procedure executed by the UE 1 and the UE 2 is merely a possible implementation in which the UE 1 and the UE 2 discover each other. Alternatively, the UE 1 may directly send the foregoing request message to discover the UE 2, without executing the discovery procedure.

Optionally, before step 230, the method further includes: The UE 1 and the UE 2 execute ProSe parameter configuration, to obtain the ProSe parameter. The ProSe parameter includes the foregoing correspondence between the ProSe code and the mechanism indicator, and the correspondence between the ProSe code and the mechanism may include the correspondence between the first RSC and the first mechanism indicator. Optionally, the correspondence between the ProSe code and the mechanism indicator includes a correspondence between an RSC and a control plane security mechanism indicator. Alternatively, in another design, the ProSe parameter includes the correspondence between the ProSe code and the mechanism indicator, and the correspondence between the RSC and the control plane security mechanism indicator. For the correspondence between the RSC and the control plane security mechanism indicator, refer to related descriptions of "the security establishment mechanism with network assistance" in the foregoing term descriptions. Details are not described again. The ProSe parameter configuration processes of the UE 1 and the UE 2 may be respectively performed in processes in which the UE 1 and the UE 2 register with a network, or may be separately performed after the UE 1 and the UE 2 register with the network. Alternatively, the ProSe parameter may be a default parameter preconfigured in the device (in this case, a pre-configuration process may be considered as a ProSe parameter configuration process).

In this embodiment of this application, the request message may indicate the target mechanism, or may be used to determine the target mechanism.

In a possible design, the request message is a DCR message, and an information element in the DCR corresponds to the target mechanism. In other words, the DCR message may indicate the target mechanism.

Table 1 below shows examples of information elements in DCR messages respectively corresponding to an in-coverage mechanism and an out-of-coverage mechanism. Table 2 further shows examples of information elements in DCR messages respectively corresponding to a control plane mechanism and a user plane mechanism. The first column lists information elements currently defined in the DCR message, lists information elements included in the DCR message corresponding to the out-of-coverage mechanism and information elements included in the DCR message corresponding to the in-coverage mechanism. An information element marked as "optional" indicates that the information element is optional in the DCR message, and an information element not marked as "optional" indicates that the information element is mandatory in the DCR message. With reference to the second column and the third column, "Absent" in each row indicates that a DCR message corresponding to a different mechanism does not include an information element corresponding to the row, and "Present" in each row indicates that a DCR message corresponding to a different mechanism includes an information element corresponding to the row. Content in each row indicates that a DCR message corresponding to a different mechanism includes an information element corresponding to the row, and is defined with different types.

**Table 1**

| Information element | Out-of-coverage mechanism | In-coverage mechanism |
|---|---|---|
| Source user information | Initiating UE's app layer ID | Initiating UE's app layer ID |
| ProSe identifier | Present | Absent |
| Target user information | Target UE's app layer ID | User info ID |
| (Optional) key_est_info | Present | Absent |
| (Optional) Nonce_1 | Present | Present |
| UE security capabilities | Present | Present |
| MSB of K_{NRP-sess} ID | Present | Present |
| (Optional) K_{NRP} ID | Present | Absent |
| UE PC5 signalling security policy | Present | Present |
| RSC | Absent | Present |
| UTC-based counter LSB | Absent | Present |
| (Optional) UE ID | Absent | Present |
| (Optional) user security key ID | Absent | Present |
| (Optional) HPLMN ID | Absent | Refer to Table 2 |
| (Optional) MIC | Absent | Present |
| Source L2 ID | Present | Present |
| Destination L2 ID | Present | Present |

**Table 2**

| Information element | Control plane mechanism | User plane mechanism |
|---|---|---|
| Source user information | Initiating UE's app layer ID | Initiating UE's app layer ID |
| ProSe identifier | Absent | Absent |
| Target user information | User info ID | User info ID |
| (Optional) key_est_info | Absent | Absent |
| (Optional) Nonce_1 | Nonce_1 | K_{NRP} freshness parameter 1 |
| UE security capabilities | Present | Present |
| MSB of K_{NRP-sess} ID | Present | Present |
| (Optional) K_{NRP} ID | Absent | Absent |
| UE PC5 signalling security policy | Present | Present |
| RSC | Present | Present |
| UTC-based counter LSB | Absent | Absent |
| (Optional) UE ID | Present | Present |
| (Optional) user security key ID | CP-PRUK ID | UP-PRUK ID |
| (Optional) HPLMN ID | Absent | Present |
| (Optional) MIC | Present | Present |
| Source L2 ID | Present | Present |
| Destination L2 ID | Present | Present |

In Table 1 and Table 2, the source user information is source user information. The source user information may be user information of source UE (for example, the UE 1 in this embodiment), and may be specifically an initiating UE (initiating UE)'s application layer (application layer, app layer) identifier (identifier, ID) (initiating UE's app layer ID). The ProSe identifier is a ProSe identifier, and the ProSe identifier may be an identifier of a ProSe application corresponding to the U2U relay service (for example, in this embodiment, the UE 1 uses a relay service of the UE 2 to establish a subsequent unicast link). The target user information is target user information, and a target user may be target UE (for example, the UE 3 with which the UE 1 expects to perform the ProSe communication in this embodiment, or the UE 2 in this embodiment). The target UE's app layer ID is an application layer ID of the target user. The user info ID is a user information ID. The key_est_info is key establishment information (key_est_info), for example, may be an information container used for mutual authentication and unicast key establishment. Both the Nonce_1 and the K_{NRP} freshness parameter 1 are random numbers, may be specifically random numbers provided by an initiator for generating a PC5 key, and are defined with different names in DCR messages corresponding to different mechanisms. The K_{NRP} ID is an ID of a root key K_{NRP} of a link, and is carried only when the root key already exists. The UE security capabilities are UE security capabilities, and may specifically include a PC5 security algorithm supported by the UE. The MSB of K_{NRP-sess} ID is a most significant bit (most significant bit, MSB) of an ID of a session (session) key K_{NRP-sess}. The UE PC5 signalling security policy is a UE PC5 signalling security policy. The UE ID is an identifier of the UE. If the DCR message corresponding to the in-coverage mechanism does not carry the UP-PRUK ID and the CP-PRUK ID (in other words, the DCR message does not include the information element user security key ID), an SUCI of the UE that sends the DCR message needs to be carried in this information element. The user security key ID is a user security key ID, may be specifically a security key ID of the initiating UE, and is classified into the UP-PRUK ID and the CP-PRUK ID based on a difference between the user plane mechanism and the control plane mechanism in the in-coverage mechanism. The HPLMN ID is an ID of a home public land mobile network (home public land mobile network, HPLMN), and may be specifically an HPLMN ID of the initiating UE. The MIC is message integrity check (message integrity check, MIC) code. The source L2 ID is a source end layer 2 (layer 2, L2) ID, and a source end may be a device (for example, the UE 1 in this embodiment) from which the DCR message comes. The destination L2 ID is a peer end layer 2 ID, and a peer end may be a device to which the DCR message is to be sent. For unicast, the destination L2 ID may be, for example, an L2 ID of a device (for example, the UE 2 in this embodiment) that unicasts with the UE 1. For broadcast or multicast, the destination L2 ID may be a dedicated default ID for broadcast or multicast.

It can be learned from Table 1 and Table 2 that the information elements included in the DCR messages corresponding to the in-coverage mechanism and the out-of-coverage mechanism are not completely the same. For example, the DCR message corresponding to the out-of-coverage mechanism includes one or more of the following information elements: the source user information, the ProSe identifier, the target user information, the key_est_info, the Nonce_1, the UE security capabilities, the MSB of K_{NRP-sess} ID, the K_{NRP} ID, the UE PC5 signalling security policy, the source L2 ID, or the destination L2 ID. The DCR message corresponding to the in-coverage mechanism includes one or more of the following information elements: the source user information, the target user information, the Nonce_1, the UE security capabilities, the MSB of K_{NRP-sess} ID, the UE PC5 signalling security policy, the RSC, the UTC-based counter LSB, the UE ID, the user security key ID, the HPLMN ID, the MIC, the source L2 ID, or the destination L2 ID.

It can be found through comparison that, the DCR message corresponding to the out-of-coverage mechanism includes the information element key_est_info, and optionally further includes the information element ProSe identifier; and the DCR message corresponding to the in-coverage mechanism includes the information element UE ID or the user security key ID, and optionally further includes the information elements UTC-based counter LSB and RSC. In other words, the DCR message corresponding to the out-of-coverage mechanism does not include the information elements UE ID and user security key ID, and optionally does not include the information elements UTC-based counter LSB and RSC. The DCR message corresponding to the in-coverage mechanism does not include the information element key_est_info, and optionally does not include the information element ProSe identifier.

In other words, the DCR message corresponding to the out-of-coverage mechanism meets the following: including at least one of the information element ProSe identifier or the key_est_info, and/or excluding the information elements UE ID and user security key ID. The DCR message corresponding to the in-coverage mechanism meets the following: including at least one of the information element UE ID, the user security key ID, the UTC-based counter LSB, or the RSC, and/or excluding the information element key_est_info.

In another implementation, the information element UE ID may be named as an SUCI, and the information element user security key ID may also be distinguished and named as the CP-PRUK ID and the UP-PRUK ID based on different mechanisms. Therefore, the foregoing information element UE ID may also be replaced with the SUCI, and the information element user security key ID may also be replaced with the CP-PRUK ID or the UP-PRUK ID. For example, that the DCR message corresponding to the in-coverage mechanism includes the information element UE ID or the user security key ID may be replaced with that the DCR message corresponding to the in-coverage mechanism includes one of the information elements SUCI, CP-PRUK ID, and UP-PRUK ID.

If the UE 1 needs to perform the security establishment by using the out-of-coverage mechanism, the DCR message usually carries the information element key_est_info. In other words, for the out-of-coverage mechanism, the information element key_est_est _info may be different from that in the in-coverage mechanism. Therefore, whether the DCR message indicates the out-of-coverage mechanism may be determined based on whether the DCR message includes the key_est_info. Optionally, for the out-of-coverage mechanism, the information element ProSe identifier is a mandatory information element. Therefore, whether the DCR message indicates the out-of-coverage mechanism may be determined based on whether the DCR message includes the ProSe identifier.

If the UE 1 needs to perform the security establishment by using the in-coverage mechanism, the DCR message usually carries the information element UE ID or the user security key ID. In other words, for the in-coverage mechanism, the information element UE ID or user security key ID may be distinguished from that in the out-of-coverage mechanism. Therefore, whether the DCR message indicates the in-coverage mechanism may be determined based on whether the DCR message includes the UE ID or the user security key ID.

Optionally, for the in-coverage mechanism, the information elements UTC-based counter LSB and RSC are mandatory information elements. Therefore, whether the DCR message indicates the in-coverage mechanism may be determined based on whether the DCR message includes the UTC-based counter LSB and the RSC. Although both the DCR message corresponding to the control plane mechanism and the DCR message corresponding to the user plane mechanism include the information element RSC, different mechanisms correspond to different RSC values. Because the RSC is a mandatory information element in the DCR message corresponding to the in-coverage mechanism, the RSC in the DCR message may be used to help the receiver determine whether the target mechanism is the control plane mechanism or the user plane mechanism. As described above, the UE 1 may obtain the correspondence between the RSC and the mechanism before step 230. Therefore, the UE 1 may determine the target mechanism based on the correspondence and the first RSC corresponding to the ProSe communication. Correspondingly, the UE 2 may determine, based on the correspondence and the RSC in the DCR message, to use the control plane mechanism or the user plane mechanism.

The DCR message corresponding to the user plane mechanism optionally includes the HPLMN ID. Therefore, when the DCR message includes the HPLMN ID, it may indicate that the target mechanism is the user plane mechanism.

In addition, although some information elements are included in DCR messages corresponding to different mechanisms at the same time, types of the information elements may not necessarily be the same. For example, in the DCR message corresponding to the out-of-coverage mechanism, a type of the information element target user information is the target UE's app layer ID; and in the DCR message corresponding to the in-coverage mechanism, a type of the information element target user information is the user info ID. In the DCR message, the information element includes a type-length-value (type-length-value, TLV) field, and the target UE's app layer ID corresponding to the out-of-coverage mechanism and the user info ID corresponding to the in-coverage mechanism may be distinguished by using a type (type) in the field. Therefore, the information element target user information may indicate whether the target mechanism is the in-coverage mechanism or the out-of-coverage mechanism.

For another example, the DCR message corresponding to the in-coverage mechanism optionally includes the information element user security key ID. In the DCR message corresponding to the control plane mechanism, a type of the information element user security key ID is the CP-PRUK ID. In the DCR message corresponding to the user plane mechanism, a type of the information element user security key ID is the UP-PRUK ID. In the DCR message, the information element may also include a TLV field, and the CP-PRUK ID corresponding to the control plane mechanism and the UP-PRUK ID corresponding to the user plane mechanism may be distinguished by using a type in the field. Therefore, the information element user security key ID may also indicate whether the target mechanism is the control plane mechanism or the user plane mechanism.

The foregoing describes in detail, by using the DCR message as an example of the request message, request messages corresponding to different mechanisms, and a process of determining the target mechanism based on the request message. These examples are merely shown for ease of understanding. This application does not exclude a request of defining another request message in a future protocol to implement a same or similar function as the DCR message, or does not exclude defining more or fewer information elements in the request message, and a possibility of distinguishing different mechanisms by using other information elements.

In step 240, the UE 2 sends a first message to the UE 1 based on a network coverage status, where the first message indicates whether to agree to perform the security establishment with the UE 1 by using the target mechanism. Correspondingly, the UE 1 receives the first message.

In this embodiment, the communication apparatus that receives the request message may include the UE 2. Without loss of generality, the following describes a subsequent procedure by using an example in which the UE 2 is used as the communication apparatus that receives the request message.

The foregoing describes how the request message indicates the target mechanism by using the DCR message as an example of the request message. Based on a same principle, the UE 2 may determine the target mechanism based on the received request message, and further determine whether to agree to perform the security establishment with the UE 1 by using the target mechanism.

As described above, the UE 2 that is determined as the potential relay UE may be in network coverage, for example, the UE 122 in FIG. 1, or may not be in network coverage, for example, the UE 124 in FIG. 1. The UE 2 may determine, based on the network coverage status, whether to agree to perform the security establishment by using the target mechanism requested by the UE 1.

In a possible case, the network coverage status of the UE 2 is being in network coverage, and the UE 2 may perform the security establishment by using the in-coverage mechanism, or may perform the security establishment by using the out-of-coverage mechanism. Therefore, regardless of whether the target mechanism requested by the UE 1 is the in-coverage mechanism or the out-of-coverage mechanism, the UE 2 may agree to perform the security establishment by using the target mechanism. In this case, the first message sent by the UE 2 may indicate agreeing to perform the security establishment with the UE 1 by using the target mechanism.

In another possible case, when the network coverage status of the UE 2 is being in network coverage, the UE 2 performs the security establishment by using the in-coverage mechanism by default, and does not perform the security establishment by using the out-of-coverage mechanism. Therefore, if the target mechanism requested by the UE 1 is the out-of-coverage mechanism, the UE 2 may not agree to perform the security establishment by using the target mechanism. In this case, the first message sent by the UE 2 may indicate not agreeing to perform the security establishment with the UE 1 by using the target mechanism. If the target mechanism requested by the UE 1 is the in-coverage mechanism, the UE 2 may agree to perform the security establishment by using the target mechanism. In this case, the first message sent by the UE 2 may indicate agreeing to perform the security establishment with the UE 1 by using the target mechanism.

In still another possible case, the network coverage status of the UE 2 is not being in network coverage, and the UE 2 may perform the security establishment by using the out-of-coverage mechanism, but cannot perform the security establishment by using the in-coverage mechanism. Therefore, if the target mechanism requested by the UE 1 is the out-of-coverage mechanism, the UE 2 may agree to perform the security establishment by using the target mechanism; or if the target mechanism requested by the UE 1 is the in-coverage mechanism, the UE 2 may not agree to perform the security establishment by using the target mechanism.

The UE 2 may use different messages to indicate agreeing or not agreeing to perform the security establishment with the UE 1 by using the target mechanism.

For example, the target mechanism is the out-of-coverage mechanism, the first message may be a direct authentication and key establishment message, and the direct authentication and key establishment message indicates agreeing to perform the security establishment with the UE 1 by using the out-of-coverage mechanism, as shown in 240a in the figure. Because the direct authentication and key establishment message is an existing message applied to the out-of-coverage mechanism, the direct authentication and key establishment message may implicitly indicate agreeing to perform the security establishment with the UE 1 by using the out-of-coverage mechanism.

For another example, the target mechanism is the in-coverage mechanism, the first message may be a direct security mode command message, and the direct security mode command message indicates agreeing to perform the security establishment with the UE 1 by using the in-coverage mechanism, as shown in 240b in the figure. Because the direct security mode command message is an existing message applied to the in-coverage mechanism, the direct security mode command message may implicitly indicate agreeing to perform the security establishment with the UE 1 by using the in-coverage mechanism.

It should be noted that, in both a current in-coverage mechanism procedure and a current out-of-coverage mechanism procedure, the UE 2 sends the direct security mode command message to the UE 1. Therefore, in this embodiment, when the UE 2 agrees to use the in-coverage mechanism or the out-of-coverage mechanism, the UE 2 sends the direct security mode command message to the UE 1. The UE 1 may determine, based on the first message that is received from the UE 2 after the request message is sent in step 210, whether the UE 2 agrees to perform the security establishment with the UE 1 by using the in-coverage mechanism or the out-of-coverage mechanism. Therefore, when the target mechanism is the in-coverage mechanism, and the UE 2 agrees to use the in-coverage mechanism, the first message may be the direct security mode command message, and the UE 2 does not send the direct authentication and key establishment message to the UE 1 before sending the first message to the UE 1. In this case, the direct security mode command message may implicitly indicate agreeing to perform the security establishment with the UE 1 by using the in-coverage mechanism. For another example, when the UE 2 determines, based on the network coverage status, not to agree to perform the security establishment by using the target mechanism, the first message may be a reject (reject) message, and the reject message indicates not agreeing to use the target mechanism, as shown in 240c in the figure.

Further, the reject message may indicate one or more of the following: a reason for not agreeing to use the target mechanism, a security establishment mechanism supported by the UE 2, or a security establishment mechanism not supported by the UE 2.

For example, a reason why the UE 2 does not agree to use the target mechanism may be indicated by using a reason value. A correspondence between each reason value and a reason indicated by the reason value may be predefined, and is prestored in the UE 1 and the UE 2. For example, a reason value 1 indicates that the target mechanism is not supported, or a reason value 2 indicates not being in network coverage.

It may be understood that, if the reject message indicates that the UE 2 does not support the target mechanism, the UE 1 may try to negotiate with the UE 2 by using another target mechanism; if the reject message indicates that the UE 2 is not in network coverage, the UE 1 may select to establish PC5 link security by using the out-of-coverage mechanism; or if the reject message indicates that the UE 2 is not in network coverage and the UE 1 needs to establish PC5 link security by using the in-coverage mechanism, the UE 1 may select other potential relay UE.

For example, if the network coverage status of the UE 2 is not being in network coverage, and the target mechanism is the in-coverage mechanism, the UE 2 may carry the reason value 2 in the reject message, to indicate that the reason for not agreeing to use the target mechanism is not being in network coverage. For another example, if the UE 2 does not support the in-coverage mechanism, and the target mechanism is the in-coverage mechanism, the UE 2 may carry the reason value 1 in the reject message, to indicate that the reason for not agreeing to use the target mechanism is that the target mechanism is not supported.

It should be understood that, the foregoing examples of the reason for not agreeing to use the target mechanism and the reason value are merely shown for ease of understanding. The reason, the reason value, and the correspondence between the reason and the reason value are not limited in this application.

The UE 2 may further indicate, by using the reject message, that the mechanism supported by the UE 2 includes the out-of-coverage mechanism.

The mechanism supported by the UE 2 is indicated by using the reject message, so that when selecting the target mechanism next time to negotiate with the UE 2, the UE 1 can select the mechanism supported by the UE 2, and the two parties can complete the security establishment as soon as possible. In this way, the UE 1 can perform the ProSe communication with the UE 3 as soon as possible.

It may be understood that, the mechanism supported by the UE 2 may alternatively be implicitly indicated by using the mechanism not supported by the UE 2. The plurality of security establishment mechanisms are predefined, such as the foregoing in-coverage mechanism and out-of-coverage mechanism. For the UE 2, the mechanism supported by the UE 2 and the mechanism not supported by the UE 2 form a universal set of the foregoing plurality of mechanisms. In other words, the mechanism supported by the UE 2 and the mechanism not supported by the UE 2 are complementary. Therefore, the mechanism supported by the UE 2 may be derived from the mechanism not supported by the UE 2.

Optionally, the reject message is a message on which security protection is performed.

For example, each piece of information carried in the reject message may be information obtained after confidentiality protection and/or integrity protection is performed, or the reject message may be a message obtained after confidentiality protection and/or integrity protection is performed. A key used for confidentiality protection and/or integrity protection may be a key obtained by the UE 2 and the UE 1 in the discovery procedure. Optionally, the key used for confidentiality protection and/or integrity protection is determined based on a long term credential preconfigured in the UE 2.

Correspondingly, after receiving a message on which security protection is performed, the UE 1 may first perform de-confidentiality protection and/or integrity check, and then obtain valid information from the message. It may be understood that, a key used by the UE 1 to perform the de-confidentiality protection and/or integrity check may also be a key obtained by the UE 1 and the UE 2 in the discovery procedure. Optionally, the key used for the de-confidentiality protection and/or integrity check may be determined based on the long term credential preconfigured in the UE 1.

Whether the UE 2 performs the confidentiality protection and/or integrity protection on each piece of information in the reject message or performs the confidentiality protection and/or integrity protection on the reject message may be predefined in a protocol. The UE 2 may decrypt and/or check integrity of the received message according to a same rule.

The confidentiality protection and/or integrity protection are/is performed, so that information in the reject message can be protected, to prevent the information from being listened to by a third party. This prevents a secure connection subsequently established between the UE 1 and the UE 2 from being listened to by the third party, and ensures communication security to a greater extent.

The reject message indicates one or more of the foregoing items, so that the UE 1 can reselect a target mechanism based on the reject message, and further continue to negotiate with the UE 2, to determine the security establishment mechanism. For example, the UE 1 may select the target mechanism by repeating the foregoing step 210, and may negotiate with the UE 2 to obtain the security establishment mechanism by repeating steps 230 and 240. It may be understood that, when repeating step 210, the UE 1 may exclude a previously used target mechanism, and select a mechanism from other mechanisms as the target mechanism. For example, a previously determined target mechanism is a mechanism 1, and a currently determined target mechanism is a mechanism 2. When the UE 1 repeats step 230, a target mechanism requested to be used is a reselected target mechanism, for example, the mechanism 2. When the UE 1 repeats step 240, a message received from the UE 2 may also be different from a previous message. For example, the UE 1 previously receives the reject message, and currently receives the direct authentication and key establishment message or the direct security mode command message, or may receive the reject message. For ease of description in the following, it is assumed that the direct authentication and key establishment message or the direct security mode command message is currently received, but the reject message is not received. In other words, the UE 2 agrees to perform the security establishment with the UE 1 by using the mechanism 2.

It should be understood that, the first message listed above is merely an example, and shall not constitute any limitation on this application. Alternatively, the first message may indicate, in another manner, whether to agree to perform the security establishment with the UE 1 by using the target mechanism. For example, an indication field in the first message may indicate whether to agree to perform the security establishment with the UE 1 by using the target mechanism. For example, an indication field "0" indicates not agreeing to use the target mechanism, and an indication field "1" indicates agreeing to use the target mechanism. For another example, an indication field "00" indicates not agreeing to use the target mechanism, an indication field "01" indicates agreeing to use the in-coverage mechanism as the target mechanism, and an indication field "10" indicates agreeing to use the out-of-coverage mechanism as the target mechanism. A specific manner in which the first message indicates whether to agree to use the target mechanism is not limited in this application.

In step 250, the UE 1 performs the security establishment with the UE 2.

After obtaining, through negotiation with the UE 2, the security establishment mechanism, the UE 1 may perform the security establishment by using the mechanism.

As described above, when performing step 240, the UE 2 may send the first message by performing step 240a or 240b, to indicate agreeing to perform the security establishment by using the mechanism 1. In this case, the UE 1 may perform the security establishment with the UE 2 by using the mechanism 1. Alternatively, the UE 2 may send the first message by using step 240c, to indicate not agreeing to perform the security establishment by using the mechanism 1. The UE 1 may send the request message to the UE 2 again, to request to perform the security establishment by using the mechanism 2. When performing step 240 again, the UE 2 may send the first message by performing step 240a or 240b, to indicate agreeing to perform the security establishment by using the mechanism 2. In this case, the UE 1 may perform the security establishment with the UE 2 by using the mechanism 2.

In a possible case, the UE 1 may receive a plurality of first messages from a plurality of UEs. For example, the UE 1 sends the request message in a broadcast manner in step 230, and there may be a plurality of UEs that receive the request message. Some or all of the plurality of UEs (including the UE 2) that receive the request message may perform step 240, to send the first message to the UE 1. In this case, the UE 1 may perform a subsequent procedure based on a first message that is first received, or may perform a subsequent procedure based on a first message that is first received and that indicates agreeing to use the target mechanism, or the like. How the UE 1 performs processing when receiving the plurality of first messages depends on an internal implementation of the UE 1. This is not limited in this application.

As described above, when the first message indicates agreeing to use the target mechanism, a message in a security establishment procedure corresponding to the target mechanism may implicitly indicate agreeing to use the target mechanism. For example, the direct security mode command message implicitly indicates the security establishment mechanism with network assistance, and the direct authentication and key establishment message implicitly indicates the security establishment mechanism without network assistance. Therefore, that the second communication apparatus sends the first message to the first communication apparatus may also be understood as that the second communication apparatus performs the security establishment with the first communication apparatus by using the target mechanism. In other words, the foregoing step 240 is included in step 250, or either step 240 or step 250 may be performed.

In this embodiment of this application, the UE 1 that initiates the ProSe communication may select the target mechanism from the plurality of mechanisms, and negotiate, by sending the request message indicating the target mechanism, with the communication apparatus (for example, the UE 2) that receives the request message. If the UE 2 agrees, the target mechanism is used for the security establishment. If the UE 2 does not agree, a target mechanism is re-determined to continue a peer negotiation. In this way, the security mechanism may be a security mechanism supported by both the UE 1 and the UE 2. This facilitates successful establishment of a secure connection.

In addition, in this mechanism, a plurality of mechanisms are provided for the UE 1 and the UE 2 to negotiate, and different network conditions are considered in the plurality of mechanisms. In one aspect, the out-of-coverage mechanism is provided for a case in which the UE 2 is not in network coverage, so that the UE 2 that is not in network coverage can also establish a communication connection to the UE 1, and is free from dependency on network assistance. For example, in the scenario shown in FIG. 1, the UE 121 expects the UE 124 to assist communication between the UE 121 and the UE 125. However, the UE 124 is not in network coverage, but may perform the security establishment with the UE 121 by using the out-of-coverage mechanism, to provide strong support for the communication between the UE 121 and the UE 125. In another aspect, the in-coverage mechanism is provided for a case in which the UE 2 is in network coverage. A network device may perform the security establishment for the UE 1 based on latest subscription information, to ensure successful establishment of the security establishment. For example, in the scenario shown in FIG. 1, the UE 121 expects the UE 122 to assist communication between the UE 121 and the UE 123, and the UE 122 is exactly in network coverage. Therefore, the UE 121 may perform the security establishment with the UE 122 by using the in-coverage mechanism or the out-of-coverage mechanism. When the in-coverage mechanism is used to perform the security establishment, because the network device may determine, based on the latest subscription information, whether to authorize the UE 121 and the UE 122, a problem of a security establishment failure that may be caused by a permission change can be avoided.

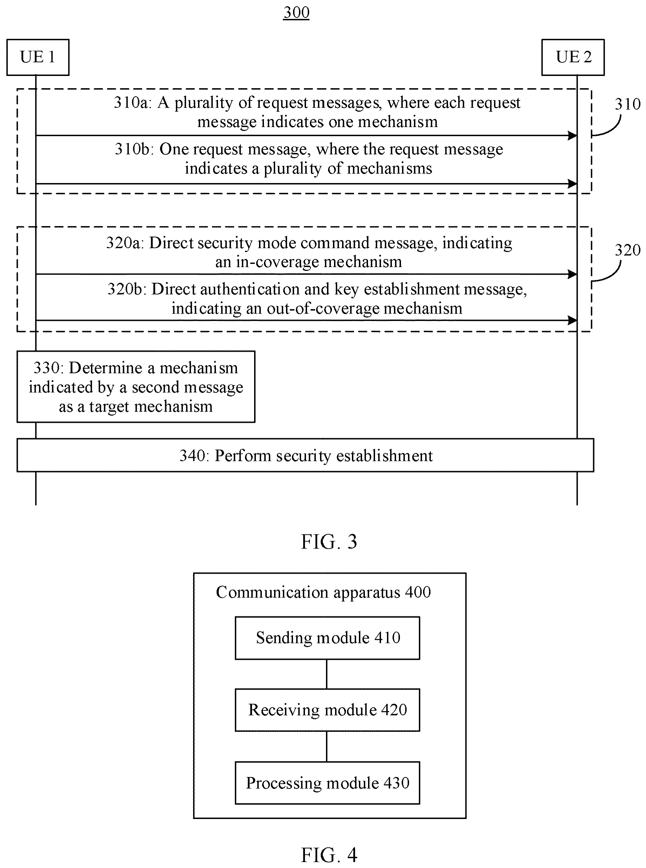

FIG. 3 is a schematic flowchart of a security establishment method according to an embodiment of this application. The procedure shown in FIG. 3 describes a mechanism in which potential relay UE selects a mechanism and feeds back to end UE.

The method 300 shown in FIG. 3 may include step 310 to step 340. The following describes the steps in the method 300 in detail.

In step 310, UE 1 sends at least one request message, where the at least one request message indicates a plurality of mechanisms, and the plurality of mechanisms include a security establishment mechanism with network assistance and a security establishment mechanism without network assistance.

Optionally, the at least one request message indicates the plurality of mechanisms, and the plurality of mechanisms include a user plane mechanism in the security establishment mechanism with network assistance, a control plane mechanism in the security establishment mechanism with network assistance, and the security establishment mechanism without network assistance.

For descriptions of the security establishment mechanism with network assistance and the security establishment mechanism without network assistance, refer to related descriptions in the foregoing term descriptions. Details are not described again. It should be understood that, the security establishment mechanism with network assistance and the security establishment mechanism without network assistance are merely two examples of a security establishment mechanism, and shall not constitute any limitation on this application. This application does not exclude a possibility that the foregoing plurality of mechanisms further include another security establishment mechanism, and does not exclude a possibility that another mechanism that can be used to implement a same or similar mechanism is defined in future technical specifications.

Optionally, the plurality of mechanisms may correspond to a plurality of request messages, and each request message may indicate one mechanism. Correspondingly, step 310 includes step 310a: The UE 1 sends the plurality of request messages, where each request message indicates one mechanism, and mechanisms corresponding to the plurality of request messages include the security establishment mechanism with network assistance (namely, an in-coverage mechanism) and the security establishment mechanism without network assistance (namely, an out-of-coverage mechanism).

For example, the plurality of mechanisms include the in-coverage mechanism (for example, the control plane mechanism or the user plane mechanism) and the out-of-coverage mechanism, and the at least one request message includes a request message corresponding to the in-coverage mechanism and a request message corresponding to the out-of-coverage mechanism.

For another example, the plurality of mechanisms include the control plane mechanism, the user plane mechanism, and the out-of-coverage mechanism, and the at least one request message includes a request message corresponding to the control plane mechanism, a request message corresponding to the user plane mechanism, and a request message corresponding to the out-of-coverage mechanism.

An information element in each request message may correspond to one mechanism, and each request message may indicate one mechanism. For details about an information element in a request message corresponding to each mechanism, refer to the foregoing related descriptions in which the DCR message is used as an example in combination with Table 1 and Table 2. Details are not described again.

Optionally, the at least one request message is one request message, and the request message indicates the plurality of mechanisms. Correspondingly, step 310 includes step 310b: The UE 1 sends one request message, where the request message indicates the plurality of mechanisms, and the plurality of mechanisms include the security establishment mechanism with network assistance and the security establishment mechanism without network assistance. Further, the plurality of mechanisms may include the user plane mechanism and the out-of-coverage mechanism; or the plurality of mechanisms may include the control plane mechanism and the out-of-coverage mechanism; or the plurality of mechanisms may include the user plane mechanism, the control plane mechanism, and the out-of-coverage mechanism.

In a possible design, the request message includes an information element corresponding to each of the plurality of mechanisms. The foregoing DCR message is used as an example. If the plurality of mechanisms are indicated by using one DCR message, the DCR message may include one or more of the following information elements: source user information, ProSe identifier, target user information, key_est_info, Nonce_1, UE security capabilities, MSB of K_{NRP-sess} ID, K_{NRP} ID, UE PC5 signalling security policy, RSC, UTC-based counter LSB, UE ID, user security key ID, HPLMN ID, source L2 ID, or destination L2 ID. In other words, the DCR message may include an information element corresponding to the out-of-coverage mechanism and an information element corresponding to the in-coverage mechanism. For a correspondence between the information element in the DCR message and the in-coverage mechanism or the out-of-coverage mechanism, and a correspondence between the information element in the DCR message and the control plane mechanism or the user plane mechanism, refer to related descriptions in the foregoing method 200 with reference to Table 1 and Table 2. Details are not described again.

Among the foregoing plurality of information elements, content of some information elements varies with different corresponding mechanisms, content of some information elements does not change with different corresponding mechanisms, and some information elements may exist in a DCR message corresponding to the in-coverage mechanism but do not exist in a DCR message corresponding to the out-of-coverage mechanism, or exist in the DCR message corresponding to the out-of-coverage mechanism but do not exist in the DCR message corresponding to the in-coverage mechanism. When constructing the DCR message, the UE 1 may carry information elements that correspond to the plurality of mechanisms but have different content in a plurality of different fields of the DCR message, and carry information elements that correspond to the plurality of mechanisms and have same content in a same field of the DCR message.

For example, in the plurality of information elements shown in Table 1, the information elements UE security capabilities, UE PC5 signalling security policy, source L2 ID, and destination L2 ID each correspond to same content of the out-of-coverage mechanism and the in-coverage mechanism. Therefore, each information element may be carried in one field. The information elements such as the source user info and the target user info respectively correspond to different content of the out-of-coverage mechanism and the in-coverage mechanism. Therefore, each information element may be carried in two fields, and content carried in the two fields respectively correspond to the out-of-coverage mechanism and the in-coverage mechanism. The information element key_est_info exists in the DCR message corresponding to the out-of-coverage mechanism, and the information element UE ID or the user security key ID exists in the DCR message corresponding to the in-coverage mechanism. Therefore, in this embodiment, the information element UE ID or the user security key ID, and the key_est_info may be carried in different fields in the same DCR message. In this way, information elements with same content occupy a same field in the DCR message, and information elements with different content occupy a plurality of fields in the DCR message, so that unnecessary field overheads of the DCR message can be reduced, and air interface overheads can be reduced.

In another implementation, when constructing the DCR message, the UE 1 may carry the information elements corresponding to the plurality of mechanisms to a plurality of different fields, regardless of whether content carried on the information elements is the same. In this way, the UE 1 does not need to determine which information elements have same content when corresponding to different mechanisms, and which information elements have different content when corresponding to different mechanisms, so that processing logic is simpler.

It should be understood that, for ease of understanding, the foregoing merely describes a structure design of the request message by using an information element in the DCR message as an example, and shall not constitute any limitation on this application. An information element included in the request message and content of the information element are not limited in this application.

As described above, the UE 1 may send the at least one request message in a unicast manner, a multicast manner, or a broadcast manner. If the UE 1 sends the at least one request message in a unicast manner, the UE 1 may send the at least one request message to UE 2 discovered via a discovery procedure. Correspondingly, in step 310, the UE 2 receives the at least one request message. For example, if the UE 1 sends one request message, the UE 2 receives the request message. If the UE 1 sends a plurality of request messages, the UE 2 receives the plurality of request messages from the UE 1. If the UE 1 sends the at least one request message in a broadcast manner, there may be one or more communication apparatuses that receive the at least one request message. Correspondingly, in step 310, the one or more communication apparatuses receive the at least one request message. In this embodiment, the one or more communication apparatuses may include the UE 2.

Optionally, before step 310, the method further includes: The UE 1 and the UE 2 execute ProSe parameter configuration, to obtain a ProSe parameter. The ProSe parameter may include a correspondence between an RSC and a control plane security mechanism indicator, where the correspondence between the RSC and the control plane security mechanism indicator includes a correspondence between the RSC and a control plane mechanism indicator. For a description of the control plane mechanism indicator, refer to the related description of "the security establishment mechanism with network assistance" in the foregoing term descriptions. Details are not described again. ProSe parameter configuration processes of the UE 1 and the UE 2 may be performed in processes in which the UE 1 and the UE 2 register with a network, or may be separately performed after the UE 1 and the UE 2 register with the network, or may be preconfigured in a device by default.

In step 320, the UE 2 sends a second message to the UE 1 based on a network coverage status, where the second message indicates to perform security establishment with the UE 1 by using one of the plurality of mechanisms. Correspondingly, the UE 1 receives the second message from the UE 2.

In this embodiment, the communication apparatus that receives the request message may include the UE 2. Without loss of generality, the following describes a subsequent procedure by using an example in which the UE 2 is used as the communication apparatus that receives the at least one request message.

After receiving the at least one request message, the UE 2 may determine the foregoing plurality of mechanisms based on an information element included in the at least one request message, may further select one mechanism from the plurality of mechanisms based on the network coverage status, and sends the second message to the UE 1, to indicate the mechanism selected by the UE 2.

A possible case in which the UE 2 selects the mechanism based on the network coverage status is that the network coverage status of the UE 2 is being in network coverage. The UE 2 selects the in-coverage mechanism, and therefore may send the second message to the UE 1, to indicate the in-coverage mechanism.

Another possible case in which the UE 2 selects the mechanism based on the network coverage status is that the network coverage status of the UE 2 is not being in network coverage. The UE 2 selects the out-of-coverage mechanism, and therefore may send the second message to the UE 1, to indicate the out-of-coverage mechanism.

Certainly, the UE 2 may alternatively select the out-of-coverage mechanism when not being in network coverage. In this case, the UE 2 may alternatively directly select the out-of-coverage mechanism without considering the network coverage status.

For example, if the UE 2 selects the in-coverage mechanism, the second message may be a direct security mode command message, and the direct security mode command message indicates to perform the security establishment with the UE 1 by using the in-coverage mechanism, as shown in 320a in the figure. Optionally, if the UE 2 selects the in-coverage mechanism, the second message may be the direct security mode command message, and the UE 2 does not send a direct authentication and key establishment message to the UE 1 before sending the second message to the UE 1. In this case, the direct security mode command message may implicitly indicate to perform the security establishment with the UE 1 by using the in-coverage mechanism. If the UE 2 selects the out-of-coverage mechanism, the second message may be the direct authentication and key establishment message, and the direct authentication and key establishment message indicates to perform the security establishment with the UE 1 by using the out-of-coverage mechanism, as shown in 320b in the figure.

Because the direct security mode command message is an existing message applied to the in-coverage mechanism, the direct security mode command message may implicitly indicate to perform the security establishment by using the in-coverage mechanism. Because the direct authentication and key establishment message is an existing message applied to the out-of-coverage mechanism, the direct authentication and key establishment message may implicitly indicate to perform the security establishment by using the out-of-coverage mechanism.

In a possible case, the UE 2 may further determine a target mechanism with reference to a mechanism selection rule.

In other words, step 320 includes: determining the target mechanism based on the network coverage status and according to the mechanism selection rule.

For example, after receiving the at least one request message, the UE 2 may determine the foregoing plurality of mechanisms based on the at least one request message, may further select one mechanism from the plurality of mechanisms based on the network coverage status and according to the mechanism selection rule, and sends the second message to the UE 1, to indicate the mechanism selected by the UE 2. The mechanism selection rule may be, for example, the rule listed in the foregoing method 200. For example, the mechanism selection rule may be a correspondence between an RSC and a mechanism indicator, or may be priority information, or may be a combination of a correspondence between an RSC and a mechanism indicator and priority information. This is not limited in this application. In addition, the mechanism selection rule may alternatively be "first come, first served", that is, determining a mechanism indicated by a first received second message as the target mechanism; or may be selecting the target mechanism based on receiving quality or power of a plurality of second messages, or the like. This application includes but is not limited to this.

For specific implementation logic for a second communication apparatus to send the second message to a first communication apparatus based on the network coverage status in step 330, refer to the related description in step 240 in the foregoing method 200. Details are not described herein again.

In step 330, the UE 1 determines a mechanism indicated by the second message as the target mechanism.

In this embodiment, the target mechanism is a security establishment mechanism determined by the UE 1. The UE 1 may determine the target mechanism based on the received second message.

As described above, the UE 1 may receive the direct security mode command message in step 320a, and further determine that the target mechanism is the in-coverage mechanism. Alternatively, the UE 1 may receive the direct authentication and key establishment message in step 320b, and further determine that the target mechanism is the out-of-coverage mechanism. Optionally, the UE 1 may receive the direct security mode command message in step 320a, and does not obtain the direct authentication and key establishment message from the UE 2 before step 320a, to determine that the target mechanism is the in-coverage mechanism. In other words, the UE 1 may determine a mechanism indicated by the second message as the target mechanism.

Further, the in-coverage mechanism includes the user plane mechanism and the control plane mechanism. If the UE 1 receives the direct security mode command message, the UE 1 may further determine, based on an information element in the message, whether the target mechanism is the user plane mechanism or the control plane mechanism.

Table 3 below shows information elements in direct security mode command messages respectively corresponding to the control plane mechanism and the user plane mechanism.

**Table 3**

| Information element | Control plane mechanism | User plane mechanism |
|---|---|---|
| Nonce_2 | Nonce_2 | K_{NRP} freshness parameter 2 |
| Selected security algorithm | Present | Present |
| UE security capabilities | Present | Present |
| MSB of K_{NRP} ID | Present | Present |
| **LSB** of K_{NRP-sess} **ID** | Present | Present |
| UE PC5 signalling security policy | Present | Present |
| RSC | Present | Present |
| (Optional) GBA | Absent | Present |
| EAP message | Absent | Present |
| Source L2 ID | Present | Present |
| Destination L2 ID | Present | Present |

In Table 3, both the Nonce_2 and the K_{NRP} freshness parameter 2 are random numbers, may be specifically random numbers provided by a sender of the message for generating a PC5 key, and are defined with different names in direct security mode command messages corresponding to different mechanisms. The selected security algorithm is a selected encryption algorithm. The LSB of K_{NRP-sess} ID is a least significant bit (least significant bit, LSB) of a session key K_{NRP-sess} ID. For details about generic bootstrapping architecture (generic bootstrapping architecture, GBA) push information (GBA Push Info), refer to a related description in 3GPP TS 33.503. Details are not described in this specification. The EAP message is an extensible authentication protocol (extensible authentication protocol, EAP) message. For other information elements, refer to the foregoing related descriptions with reference to Table 1 and Table 2. Details are not described again.

It can be learned from Table 3 that, the information elements included in the direct security mode command messages respectively corresponding to the control plane mechanism and the user plane mechanism are not completely the same. For example, the direct security mode command message corresponding to the control plane mechanism includes one or more of the following information elements: the Nonce_2, the selected security algorithm, the UE security capabilities, the MSB of K_{NRP} ID, the LSB of K_{NRP-sess} ID, the UE PC5 signalling security policy, the RSC, the source L2 ID, or the destination L2 ID; and the direct security mode command message corresponding to the user plane mechanism includes one or more of the following information elements: the Nonce_2, the selected security algorithm, the UE security capabilities, the MSB of K_{NRP} ID, the LSB of K_{NRP-sess} ID, the UE PC5 signalling security policy, the RSC, the GPI, the EAP message, the source L2 ID, or the destination L2 ID.

It can be found through comparison that, the direct security mode command message corresponding to the user plane mechanism includes the information elements EAP message and GPI, but the direct security mode command message corresponding to the control plane mechanism does not include the information elements EAP message and GPI. The EAP message is a mandatory information element. Therefore, whether a direct security mode command message includes the information element EAP message may be used to determine whether the message indicates the user plane mechanism or the control plane mechanism. When the direct security mode command message includes the information element EAP message, the message indicates the user plane mechanism. When the direct security mode command message does not include the information element EAP message, the message indicates the control plane mechanism. In addition, the GPI is an optional information element. Therefore, when the direct security mode command message includes the information element GPI, it may also be determined that the message indicates the user plane mechanism.

Although both the direct security mode command messages respectively corresponding to the control plane mechanism and the user plane mechanism include the information element RSC, different mechanisms correspond to different RSC values. Because the RSC is a mandatory information element in a direct security mode command message corresponding to the in-coverage mechanism, whether the target mechanism is the control plane mechanism or the user plane mechanism may be determined by using the RSC in the direct security mode command message. As described above, the UE 2 may obtain the correspondence between the RSC and the control plane security mechanism indicator before step 320. Therefore, the UE 2 may carry, based on the correspondence when determining to use the control plane mechanism, the RSC corresponding to the control plane mechanism in the direct security mode command message, or may carry, when determining to use the user plane mechanism, the RSC corresponding to the user plane mechanism in the direct security mode command message. Correspondingly, the UE 1 may determine, based on the correspondence and the RSC in the direct security mode command message, to use the control plane mechanism or the user plane mechanism.

It may be understood that, the correspondence between the RSC and the control plane security mechanism indicator is merely a possible form, and the correspondence may alternatively be replaced with the correspondence between the ProSe code and the mechanism in the method 200. For example, in a ProSe parameter configuration phase, the UE 1 and the UE 2 may separately obtain ProSe parameters, where the ProSe parameters may include the correspondence between the ProSe code and the mechanism. Because implementation logic for the UE 2 to generate the direct security mode command message based on the correspondence and implementation logic for the UE 1 to determine the target mechanism based on the direct security mode command message are similar to those described above, details are not described again.

Certainly, the second message may alternatively indicate the target mechanism in another manner. For example, the second message may indicate the target mechanism by using an indication field. For example, "00" indicates the out-of-coverage mechanism, "01" indicates the control plane mechanism, and "10" indicates the user plane mechanism. A specific manner in which the second message indicates the target mechanism is not limited in this application.

In a possible case, the UE 1 may receive a plurality of second messages from a plurality of UEs. For example, the UE 1 sends the at least one request message in a broadcast manner in step 310, and there may be a plurality of UEs that receive the at least one request message. Some or all of the plurality of UEs (including the UE 2) that receive the request message may perform step 320, to send the second message to the UE 1. In this case, mechanisms indicated by all second messages may be the same or may be different. The UE 1 may further determine the target mechanism with reference to the mechanism selection rule.

In other words, step 330 includes: determining, according to the mechanism selection rule, a mechanism indicated by one of the plurality of second messages as the target mechanism.

For example, the UE 1 may determine, based on the plurality of second messages, the mechanisms indicated by all second messages. If the mechanisms indicated by the plurality of second messages are a plurality of mechanisms, the UE 1 may determine the target mechanism from the plurality of mechanisms with reference to the mechanism selection rule. The mechanism selection rule may be, for example, the rule listed in the foregoing method 200. For example, the mechanism selection rule may be the correspondence between the RSC and the mechanism indicator, or may be the priority information, or may be the combination of the correspondence between the RSC and the mechanism indicator and the priority information. This is not limited in this application. In addition, the mechanism selection rule may alternatively be "first come, first served", that is, determining the mechanism indicated by the first received second message as the target mechanism; or may be selecting the target mechanism based on the receiving quality or power of the plurality of second messages, or the like. This application includes but is not limited to this.

In step 340, the UE 1 performs the security establishment with the UE 2.

In this embodiment, it is assumed that the target mechanism determined by the UE 1 is the mechanism indicated by the second message from the UE 2. The UE 1 may perform the security establishment with the UE 2 by using the target mechanism. For a specific procedure in which the UE 1 performs the security establishment with the UE 2, refer to the conventional technology. Details are not described herein.

As described above, when the second message indicates a mechanism, a message in a security establishment procedure corresponding to the mechanism may implicitly indicate the mechanism. For example, the direct security mode command message implicitly indicates the security establishment mechanism with network assistance, and the direct authentication and key establishment message implicitly indicates the security establishment mechanism without network assistance. Therefore, that the second communication apparatus sends the second message to the first communication apparatus may also be understood as that the second communication apparatus performs the security establishment with the first communication apparatus by using the selected mechanism, and the first communication apparatus may also directly perform a subsequent security establishment procedure after receiving the message. In other words, the foregoing step 330 is optional, and step 320 is included in step 340, or either step 320 or step 340 may be performed.

In this embodiment of this application, the UE 1 that initiates ProSe communication may send at least one request message corresponding to a plurality of mechanisms, so that a communication apparatus (for example, the UE 2) that receives the at least one request message selects a mechanism based on the network coverage status, and responds to the UE 1 by using the selected mechanism indicated by the second message. The UE 1 may determine the target mechanism based on the second message, and further perform the security establishment with the UE 2 by using the target mechanism. In this way, the security mechanism may be a security mechanism supported by both the UE 1 and the UE 2. This facilitates successful establishment of a secure connection.

In addition, in this mechanism, a plurality of mechanisms are provided for the UE 2 to select, and different network conditions are considered in the plurality of mechanisms. In one aspect, the out-of-coverage mechanism is provided for a case in which the UE 2 is not in network coverage, so that the UE 2 that is not in network coverage can also establish a communication connection to the UE 1, and is free from dependency on network assistance. In another aspect, the in-coverage mechanism is provided for a case in which the UE 2 is in network coverage. A network device may perform the security establishment for the UE 1 based on latest subscription information, to ensure successful establishment of the security establishment. In addition, because the network device may determine, based on the latest subscription information, whether to authorize the UE 121 and the UE 122, a problem of a security establishment failure that may be caused by a permission change can be avoided. For an example in which different network conditions are considered in the plurality of mechanisms, refer to related descriptions of technical effects in the method 200. Details are not described again.

It should be understood that, in the embodiments shown in FIG. 2 and FIG. 3, a specific procedure in which the UE 1 performs the security establishment with the UE 2 is described, and a process in which the UE 1 performs the ProSe communication with the UE 3 via the UE 2 is not described in detail. It may be understood that, if UEs perform the ProSe communication, preconfiguration needs to be performed before the procedure shown in FIG. 2 or FIG. 3 is initiated. For example, the UEs may separately obtain information such as authorization and a ProSe policy that are required by a U2U relay service. Because a preconfiguration process is not a focus of this application, for a specific process of the preconfiguration process, refer to the conventional technology. Details are not described in this specification.

The foregoing describes in detail the method provided in embodiments of this application with reference to the plurality of accompanying drawings. The following describes apparatuses provided in embodiments of this application with reference to the accompanying drawings.

FIG. 4 to FIG. 6 are diagrams of possible apparatuses according to embodiments of this application. These apparatuses may be configured to implement functions of the first communication apparatus (for example, the UE 1), the second communication apparatus (for example, the UE 2), or the PCF in the foregoing method embodiments, and therefore can also implement beneficial effects of the foregoing method embodiments.

FIG. 4 is a block diagram of a communication apparatus according to an embodiment of this application. As shown in FIG. 4, the communication apparatus 400 includes a sending module 410, a receiving module 420, and a processing module 430.

In an embodiment, the communication apparatus 400 may be configured to implement a function of the UE 1 in the method embodiment shown in FIG. 2, or may be configured to implement a function of the UE 2 in the method embodiment shown in FIG. 2, or may be configured to implement a function of the PCF in the method embodiment shown in FIG. 2.

In a possible design, the communication apparatus 400 is configured to implement a function of the UE 1 in the method embodiment shown in FIG. 2. In this case, the communication apparatus 400 may be an initiator of a ProSe service, for example, the UE 121 in FIG. 1.

For example, the processing module 430 is configured to determine a target mechanism from a plurality of mechanisms, where the plurality of mechanisms include a security establishment mechanism with network assistance and a security establishment mechanism without network assistance; the sending module 410 is configured to send a request message, where the request message is used to request a second communication apparatus that receives the request message to perform security establishment with the communication apparatus 400 by using the target mechanism; and the receiving module 420 is configured to receive a first message from the second communication apparatus, where the first message indicates whether to agree to perform the security establishment with the communication apparatus 400 by using the target mechanism.

Optionally, the processing module 430 is specifically configured to determine the target mechanism from the plurality of mechanisms according to a mechanism selection rule.

In an example, the mechanism selection rule includes a correspondence between a first RSC corresponding to proximity-based service communication and a first mechanism indicator, where the first mechanism indicator indicates a first mechanism in the plurality of mechanisms. The processing module 430 is specifically configured to determine, based on the correspondence, the first mechanism corresponding to the first mechanism indicator as the target mechanism.

In another example, the mechanism selection rule includes priority information, and the priority information indicates a priority sequence of mechanisms in the plurality of mechanisms. The processing module 430 is specifically configured to determine the target mechanism from the plurality of mechanisms based on the priority sequence of the plurality of mechanisms. For example, a mechanism with a highest priority in the plurality of mechanisms is determined as the target mechanism.

Optionally, the receiving module 420 is further configured to receive the mechanism selection rule from a PCF.

Further, the mechanism selection rule is determined based on service specific information of a ProSe corresponding to the communication apparatus 400.

Optionally, the target mechanism is the security establishment mechanism without network assistance, the first message is a direct authentication and key establishment message, and the direct authentication and key establishment message indicates agreeing to perform the security establishment with the communication apparatus 400 by using the security establishment mechanism without network assistance.

Optionally, the target mechanism is the security establishment mechanism without network assistance, the first message is a direct security mode command message, and the direct security mode command message indicates agreeing to perform the security establishment with the communication apparatus 400 by using the security establishment mechanism with network assistance.

Optionally, the first message is a reject message, and the reject message indicates one or more of the following: a reason for not agreeing to perform the security establishment with the communication apparatus 400 by using the target mechanism, a security establishment mechanism supported by the second communication apparatus, or a security establishment mechanism not supported by the second communication apparatus.

In another possible design, the communication apparatus 400 is configured to implement a function of the UE 2 in the method embodiment shown in FIG. 2. In this case, the communication apparatus 400 may be a U2U relay of a ProSe service, for example, the UE 122 or the UE 124 in FIG. 1.

For example, the receiving module 420 is configured to receive the request message from a first communication apparatus, where the request message is used to request the communication apparatus 400 to perform security establishment with the first communication apparatus by using a target mechanism, and the target mechanism is a security establishment mechanism with network assistance or a security establishment mechanism without network assistance; and the sending module 410 is configured to send a first message to the first communication apparatus based on a network coverage status, where the first message indicates whether to agree to perform the security establishment with the first communication apparatus by using the target mechanism, and the network coverage status includes being in network coverage or not being in network coverage.

Optionally, the processing module 430 is configured to determine, based on the network coverage status, whether to agree to perform the security establishment with the first communication apparatus by using the target mechanism.

Optionally, if the network coverage status of the communication apparatus 400 is being in network coverage, the first message indicates agreeing to perform the security establishment with the first communication apparatus by using the target mechanism.

Optionally, if the target mechanism is the security establishment mechanism with network assistance, and the network coverage status of the communication apparatus 400 is not being in network coverage, the first message indicates not agreeing to perform the security establishment with the first communication apparatus by using the target mechanism.

Optionally, if the target mechanism is the security establishment mechanism without network assistance, and the network coverage status of the communication apparatus 400 is not being in network coverage, the first message indicates agreeing to perform the security establishment with the first communication apparatus by using the target mechanism.

Optionally, the target mechanism is the security establishment mechanism without network assistance, the first message is a direct authentication and key establishment message, and the direct authentication and key establishment message indicates agreeing to perform the security establishment with the first communication apparatus by using the security establishment mechanism without network assistance.

Optionally, the target mechanism is the security establishment mechanism with network assistance, the first message is a direct security mode command message, and the direct security mode command message indicates agreeing to perform the security establishment with the first communication apparatus by using the security establishment mechanism with network assistance.

Optionally, when the communication apparatus 400 does not agree to perform the security establishment with the first communication apparatus by using the target mechanism, the first message is a reject message, and the reject message indicates one or more of the following: a reason for not agreeing to perform the security establishment with the first communication apparatus by using the target mechanism, a security establishment mechanism supported by the communication apparatus 400, or a security establishment mechanism not supported by the communication apparatus 400.

In the foregoing two possible designs, optionally, the target mechanism is the security establishment mechanism without network assistance, and the request message includes key_est_info.

In the foregoing two possible designs, optionally, the target mechanism is the security establishment mechanism with network assistance, and the request message includes at least one of the following: a control plane proximity-based service remote user key identifier CP-PRUK ID, a user plane proximity-based service remote user key identifier UP-PRUK ID, or a subscription concealed identifier SUCI.

Further, the security establishment mechanism with network assistance is a control plane-based security establishment mechanism or a user plane-based security establishment mechanism.

Correspondingly, the request message further includes an RSC, and the RSC is used to determine the control plane-based security establishment mechanism or the user plane-based security establishment mechanism.

In still another possible design, the communication apparatus 400 is configured to implement a function of the PCF in the method embodiment shown in FIG. 2.

For example, the processing module 430 is configured to determine a mechanism selection rule, where the mechanism selection rule is used to determine, from a plurality of mechanisms, a target mechanism for security establishment between a first communication apparatus and a second communication apparatus, the plurality of mechanisms include a security establishment mechanism with network assistance and a security establishment mechanism without network assistance, and the first communication apparatus is an apparatus that initiates proximity-based service communication; and the sending module 410 is further configured to send the mechanism selection rule to the first communication apparatus.

Optionally, the mechanism selection rule includes a correspondence between a first RSC corresponding to the proximity-based service communication and a first mechanism indicator, where the first mechanism indicator indicates a first mechanism in the plurality of mechanisms.

Optionally, the mechanism selection rule includes priority information, and the priority information indicates a priority sequence of the plurality of mechanisms.

Optionally, the receiving module 420 is configured to receive information from UDM, where the information is used to determine the mechanism selection rule.

Optionally, the information is service specific information of a ProSe corresponding to the first communication apparatus.

In another embodiment, the communication apparatus 400 may be configured to implement a function of the UE 1 in the method embodiment shown in FIG. 3, or may be configured to implement a function of the UE 2 in the method embodiment shown in FIG. 3.

In a possible design, the communication apparatus 400 is configured to implement a function of the UE 1 in the method embodiment shown in FIG. 3. In this case, the communication apparatus 400 may be an initiator of a ProSe service, for example, the UE 121 in FIG. 1.

For example, the sending module 410 is configured to send at least one request message, where the at least one request message indicates a plurality of mechanisms, and the plurality of mechanisms include a security establishment mechanism with network assistance and a security establishment mechanism without network assistance; and the receiving module 420 is configured to receive a second message from a second communication apparatus, where the second message indicates to perform security establishment with the communication apparatus 400 by using one of the plurality of mechanisms.

Optionally, the processing module 430 is configured to: determine a mechanism indicated by the second message as a target mechanism; and perform the security establishment with the second communication apparatus by using the target mechanism.

In an example, the second message is a direct security mode command message, and the direct security mode command message indicates the security establishment mechanism with network assistance. The processing module 430 is specifically configured to determine the security establishment mechanism with network assistance indicated by the direct security mode command message as the target mechanism.

In another example, the second message is a direct authentication and key establishment message, and the direct authentication and key establishment message indicates the security establishment mechanism without network assistance. The processing module 430 is specifically configured to determine the security establishment mechanism without network assistance indicated by the direct authentication and key establishment message as the target mechanism.

Further, the receiving module 420 is specifically configured to receive a plurality of second messages from a plurality of second communication apparatuses; and the processing module 430 is specifically configured to determine, according to a mechanism selection rule, a mechanism indicated by one of the plurality of second messages as the target mechanism.

In another possible design, the communication apparatus 400 is configured to implement a function of the UE 2 in the method embodiment shown in FIG. 3. In this case, the communication apparatus 400 may be a U2U relay of a ProSe service, for example, the UE 122 or the UE 124 in FIG. 1.

For example, the receiving module 420 is configured to receive at least one request message from a first communication apparatus, where the at least one request message indicates a plurality of mechanisms, and the plurality of mechanisms include a security establishment mechanism with network assistance and a security establishment mechanism without network assistance; and the processing module 430 is configured to send a second message to the first communication apparatus based on a network coverage status, where the second message indicates to perform security establishment with the first communication apparatus by using one of the plurality of mechanisms.

Optionally, if the network coverage status of the communication apparatus 400 is being in network coverage, the second message indicates to perform the security establishment with the first communication apparatus by using the security establishment mechanism with network assistance.

Further, the second message is a direct security mode command message.

Optionally, if the network coverage status of the communication apparatus 400 is not being in network coverage, the second message indicates to perform the security establishment with the first communication apparatus by using the security establishment mechanism without network assistance.

Further, the second message is a direct authentication and key establishment message.

In the foregoing two possible designs, optionally, the at least one request message includes a plurality of request messages, and each of the plurality of request messages indicates one of the plurality of mechanisms.

In the foregoing two possible designs, optionally, the at least one request message is one request message, and the request message indicates the plurality of mechanisms.

Further, the request message includes key_est_info and at least one of the following: a CP-PRUK ID, a UP-PRUK ID, or an SUCI.

For more detailed descriptions of the sending module 410, the receiving module 420, and the processing module 430, directly refer to related descriptions in the method embodiment shown in FIG. 2 or FIG. 3. Details are not described herein again.

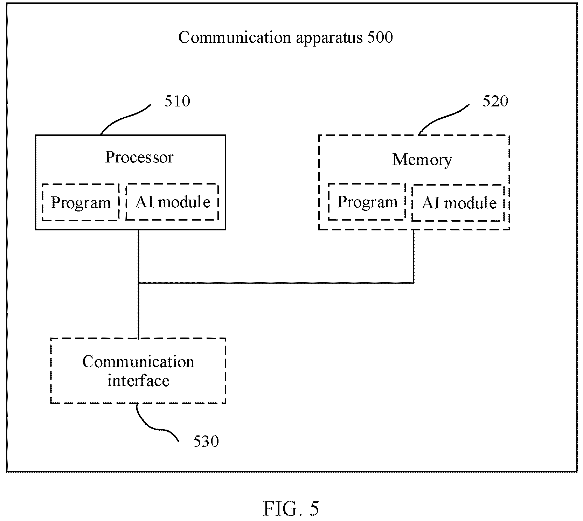

FIG. 5 is another block diagram of a communication apparatus according to an embodiment of this application. As shown in FIG. 5, the communication apparatus 500 includes one or more processors 510. The processor 510 may be a general-purpose processor, a dedicated processor, or the like, for example, may be a baseband processor or a central processing unit. The baseband processor may be configured to process a communication protocol and communication data. The central processing unit may be configured to: control a communication apparatus (for example, UE 1, UE 2, a PCF, or a chip), execute a software program, and process data of the software program.

Optionally, in a design, the processor 510 may include a program (which may also be referred to as code or an instruction), and the program may be run on the processor 510, so that the communication apparatus 500 performs the method performed by the UE 1, the UE 2, or the PCF in the foregoing method embodiments. In another possible design, the communication apparatus 500 includes a circuit (not shown in FIG. 5). The circuit is configured to implement a function of the UE 1, the UE 2, or the PCF in the foregoing method embodiments.

For example, the processor 510 may be configured to execute a computer program or instructions in a memory, to implement the steps performed by the UE 1, the UE 2, or the PCF in the embodiment shown in FIG. 2, or implement the steps performed by the UE 1 or the UE 2 in the embodiment shown in FIG. 3.

Optionally, the communication apparatus 500 may include one or more memories 520 that store a program (which may also be referred to as code or an instruction sometimes), and the program may be run on the processor 510, so that the communication apparatus 500 performs the method performed by the UE 1, the UE 2, or the PCF in the foregoing method embodiments.

Optionally, the processor 510 and/or the memory 520 may include an artificial intelligence (artificial intelligence, AI) module, and the AI module is configured to implement an AI-related function. The AI module may be implemented by using software, hardware, or a combination of software and hardware. For example, the AI module may include a radio intelligent controller (radio intelligent controller, RIC) module. For example, the AI module may be a near-real-time RIC or a non-real-time RIC.

Optionally, the processor 510 and/or the memory 520 may further store data. The processor and the memory may be separately disposed, or may be integrated together.

Optionally, the communication apparatus 500 may further include a communication interface 530. The processor 510 and the communication interface 530 are coupled to each other. The processor 510 may also be referred to as a processing unit sometimes, and controls the communication apparatus (for example, the UE 1, the UE 2, or the PCF). The communication interface 530 may also be referred to as a transceiver unit, a transceiver machine, a transceiver circuit, a transceiver, or the like sometimes, and is configured to implement a transceiver function of the communication apparatus. It may be understood that, the communication interface 530 may be a transceiver or an input/output interface.

When the communication apparatus 500 is configured to implement the method embodiment shown in FIG. 2 or FIG. 3, the processor 510 is configured to execute functions of the processing unit, and the communication interface 530 is configured to execute functions of the sending module and the receiving module. Whether the communication interface 530 is used for sending or receiving may be specifically determined based on whether the communication apparatus 500 is configured to perform a sending action or a receiving action in a mechanism executed by the communication apparatus 500.

When the communication apparatus 500 is a chip used in the UE 1, the chip implements the function of the UE 1 in the foregoing method embodiments. The chip in the UE 1 receives a signal from another module (for example, a radio frequency module or an antenna) in the UE 1, where the signal may be sent by the UE 2 to the UE 1; or the chip in the UE 1 sends a signal to another module (for example, a radio frequency module or an antenna) in the UE 1, where the signal may be sent by the UE 1 to the UE 2.

When the communication apparatus 500 is a chip used in the UE 2, the chip implements the function of the UE 2 in the foregoing method embodiments. The chip in the UE 2 receives a signal from another module (for example, a radio frequency module or an antenna) in the UE 2, where the signal may be sent by the UE 1 to the UE 2; or the chip in the UE 2 sends a signal to another module (for example, a radio frequency module or an antenna) in the UE 2, where the signal may be sent by the UE 2 to the UE 1.

It may be understood that, when the communication apparatus 500 is the UE 1 or the UE 2, the communication interface 530 may be the transceiver, and may specifically include a transmitter and a receiver. The transmitter is configured to send a signal, and the receiver is configured to receive a signal. When the communication apparatus 500 is a chip used in the UE 1 or the UE 2, the communication interface 530 may be an input/output circuit. The input circuit may be used for receiving, and the output interface may be used for sending.

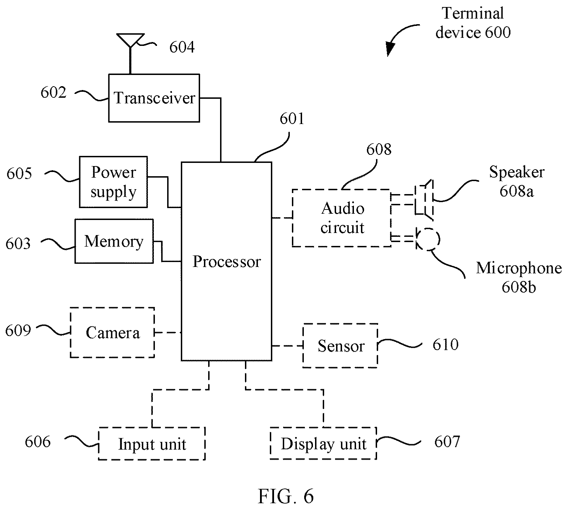

FIG. 6 is a diagram of a structure of a terminal device according to an embodiment of this application. As shown in FIG. 6, the terminal device 600 may be applied to the scenario shown in FIG. 1, to execute functions of the UE 1 or the UE 2 in the foregoing method embodiments. As shown in the figure, the terminal device 600 includes a processor 601 and a transceiver 602. Optionally, the terminal device 600 further includes a memory 603. The processor 601, the transceiver 602, and the memory 603 communicate with each other via an internal connection path, to transfer a control signal and/or a data signal. The memory 603 is configured to store a computer program. The processor 601 is configured to invoke the computer program from the memory 603 and run the computer program, to control the transceiver 602 to receive/send a signal. Optionally, the terminal device 600 may further include an antenna 604, configured to send, via a radio signal, uplink data or uplink control signalling that is output by the transceiver 602.

The processor 601 and the memory 603 may be integrated into one processing apparatus. The processor 601 is configured to execute program code stored in the memory 603 to implement the foregoing functions. During specific implementation, the memory 603 may alternatively be integrated into the processor 601, or may be independent of the processor 601. The processor 601 may correspond to the processing module in FIG. 4 or the processor in FIG. 5.

The transceiver 602 may correspond to the sending module and the receiving module in FIG. 4 or the communication interface in FIG. 5, and may also be referred to as a transceiver unit. The transceiver 602 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 600 shown in FIG. 6 can implement the processes related to the UE 1 or the processes related to the UE 2 in the method embodiment shown in FIG. 2 or FIG. 3. The operations and/or the functions of the modules in the terminal device 600 are separately for implementing corresponding procedures in the foregoing method embodiments. For details, refer to the descriptions in the foregoing method embodiments. To avoid repetition, detailed descriptions are properly omitted herein.

The processor 601 may be configured to perform an action that is implemented inside the terminal device and that is described in the foregoing method embodiments, and the transceiver 602 may be configured to perform an action of sending to the network device or receiving from the network device that is performed by the terminal device and that is described in the foregoing method embodiments. For details, refer to the descriptions in the foregoing method embodiments. Details are not described herein again.

Optionally, the terminal device 600 may further include a power supply 605, configured to supply power to various components or circuits in the terminal device.

In addition, to implement more functions of the terminal device, the terminal device 600 may further include one or more of an input unit 606, a display unit 607, an audio circuit 608, a camera 609, a sensor 610, and the like, and the audio circuit may further include a speaker 608a, a microphone 608b, and the like.

It should be noted that, the foregoing method embodiments may be applied to a processor, or implemented by a processor. The processor may be an integrated circuit chip and has a signal processing capability. During implementation, steps in the foregoing method embodiments can be implemented by using a hardware integrated logic circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor or any conventional processor or the like.

The steps of the methods disclosed with reference to embodiments of this application may be directly performed by using a hardware decoding processor, or may be performed by using a combination of hardware and software modules in the decoding processor. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these memories and any memory of another proper type.

This application further provides a chip system. The chip system includes at least one processor, configured to support implementation of the function of the UE 1, the function of the UE 2, or the function of the PCF in any one of the foregoing method embodiments, for example, receiving, sending, or processing data and/or information in the foregoing methods.

In a possible design, the chip system further includes a memory, the memory is configured to store program instructions and data, and the memory is located inside or outside the processor.

The chip system may include a chip, or may include a chip and another discrete component.

This application further provides a computer program product. The computer program product includes a computer program (which may also be referred to as code or an instruction). When the computer program is run, the method performed by the UE 1, the method performed by the UE 2, or the method performed by the PCF in the embodiment shown in FIG. 2 is performed. Alternatively, when the computer program is run, the method performed by the UE 1, or the method performed by the UE 2 in the embodiment shown in FIG. 3 is performed.

This application further provides a computer-readable storage medium. The computer-readable storage medium stores a computer program (which may also be referred to as code or an instruction). When the computer program is run, the method performed by the UE 1, the method performed by the UE 2, or the method performed by the PCF in the embodiment shown in FIG. 2 is performed. Alternatively, when the computer program is run, the method performed by the UE 1, or the method performed by the UE 2 in the embodiment shown in FIG. 3 is performed.

This application further provides a communication system. The communication system includes the UE 1, the UE 2, the PCF, and/or the apparatus in the foregoing embodiments.

All or some of the methods provided in the foregoing embodiments may be implemented by software, hardware, firmware, or any combination thereof. When software is used for implementation, all or some of the embodiments may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical mechanisms. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the mechanisms of embodiments.

In addition, function units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical mechanisms of this application essentially, or the part contributing to the conventional technology, or some of the technical mechanisms may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A security establishment method, wherein the method comprises:
determining, by a first communication apparatus based on a correspondence between a first relay service code RSC corresponding to proximity-based service communication and a first mechanism indicator, a first mechanism in a plurality of mechanisms as a target mechanism, wherein the plurality of mechanisms comprise a security establishment mechanism with network assistance and a security establishment mechanism without network assistance, and wherein the first mechanism indicator indicates the first mechanism;
sending, by the first communication apparatus, a request message, wherein the request message is used to request a second communication apparatus that receives the request message to perform security establishment with the first communication apparatus by using the target mechanism; and
receiving, by the first communication apparatus, a first message from the second communication apparatus, wherein the first message indicates agreeing to perform the security establishment with the first communication apparatus by using the target mechanism.

2. The method according to claim 1, wherein the first communication apparatus is first user equipment UE, the second communication apparatus is relay UE between the first UE and second UE, and the second UE is UE that performs the proximity-based service communication with the first UE.

3. The method according to claim 1 or 2, wherein the target mechanism is the security establishment mechanism without network assistance, and the request message comprises key establishment information key_est_info.

4. The method according to claim 1 or 2, wherein the target mechanism is the security establishment mechanism with network assistance, and the request message comprises at least one of the following: a control plane proximity-based service remote user key identifier CP-PRUK ID, a user plane proximity-based service remote user key identifier UP-PRUK ID, or a subscription concealed identifier SUCI.

5. The method according to claim 4, wherein the security establishment mechanism with network assistance is a control plane-based security establishment mechanism or a user plane-based security establishment mechanism.

6. The method according to claim 5, wherein the request message further comprises a relay service code RSC, and the RSC is used to determine the control plane-based security establishment mechanism or the user plane-based security establishment mechanism.

7. The method according to any one of claims 1 to 3, wherein the target mechanism is the security establishment mechanism without network assistance, the first message is a direct authentication and key establishment message, and the direct authentication and key establishment message indicates agreeing to perform the security establishment with the first communication apparatus by using the security establishment mechanism without network assistance.

8. The method according to any one of claims 1, 2, or 4 to 6, wherein the target mechanism is the security establishment mechanism with network assistance, the first message is a direct security mode command message, and the direct security mode command message indicates agreeing to perform the security establishment with the first communication apparatus by using the security establishment mechanism with network assistance.

9. The method according to any one of claims 1 to 8, wherein the method further comprises:
receiving the correspondence between the first RSC and the first mechanism indicator from a policy control function PCF.

10. The method according to any one of claims 1 to 8, wherein the correspondence between the first RSC and the first mechanism indicator is preconfigured in the first communication apparatus.

11. The method according to any one of claims 1 to 10, wherein the correspondence between the first RSC and the first mechanism indicator is determined based on service specific information of a proximity-based service corresponding to the first communication apparatus.

12. The method according to any one of claims 1 to 11, wherein the first message is a reject message, and the reject message indicates one or more of the following: a reason for not agreeing to perform the security establishment with the first communication apparatus by using the target mechanism, a security establishment mechanism supported by the second communication apparatus, or a security establishment mechanism not supported by the second communication apparatus.

13. The method according to any one of claims 1 to 12, wherein the method further comprises:
receiving, by the second communication apparatus, the request message, and sending the first message.

14. A security establishment method, applied to a second communication apparatus, wherein the method comprises:
receiving a request message from a first communication apparatus, wherein the request message is used to request the second communication apparatus to perform security establishment with the first communication apparatus by using a target mechanism, and the target mechanism is a security establishment mechanism with network assistance or a security establishment mechanism without network assistance; and
sending a first message to the first communication apparatus based on a network coverage status, wherein the first message indicates whether to agree to perform the security establishment with the first communication apparatus by using the target mechanism, and the network coverage status comprises being in network coverage or not being in network coverage.

15. The method according to claim 14, wherein the first communication apparatus is first user equipment UE, the second communication apparatus is relay UE between the first UE and second UE, and the second UE is UE that performs proximity-based service communication with the first UE.

16. The method according to claim 14 or 15, wherein the target mechanism is the security establishment mechanism without network assistance, and the request message comprises key establishment information key_est_info.

17. The method according to claim 14 or 15, wherein the target mechanism is the security establishment mechanism with network assistance, and the request message comprises at least one of the following: a control plane proximity-based service remote user key identifier CP-PRUK ID, a user plane proximity-based service remote user key identifier UP-PRUK ID, or a subscription concealed identifier SUCI.

18. The method according to claim 17, wherein the security establishment mechanism with network assistance is a control plane-based security establishment mechanism or a user plane-based security establishment mechanism.

19. The method according to claim 18, wherein the request message comprises a relay service code RSC, and the RSC is used to determine the control plane-based security establishment mechanism or the user plane-based security establishment mechanism.

20. The method according to claim 14 or 15, wherein if the network coverage status is being in network coverage, the first message indicates agreeing to perform the security establishment with the first communication apparatus by using the target mechanism;
if the target mechanism is the security establishment mechanism with network assistance, and the network coverage status is not being in network coverage, the first message indicates not agreeing to perform the security establishment with the first communication apparatus by using the target mechanism; or
if the target mechanism is the security establishment mechanism without network assistance, and the network coverage status is not being in network coverage, the first message indicates agreeing to perform the security establishment with the first communication apparatus by using the target mechanism.

21. The method according to any one of claims 14 to 16, or 20, wherein the target mechanism is the security establishment mechanism without network assistance, the first message is a direct authentication and key establishment message, and the direct authentication and key establishment message indicates agreeing to perform the security establishment with the first communication apparatus by using the security establishment mechanism without network assistance.

22. The method according to any one of claims 14, 15, or 17 to 20, wherein the target mechanism is the security establishment mechanism with network assistance, the first message is a direct security mode command message, and the direct security mode command message indicates agreeing to perform the security establishment with the first communication apparatus by using the security establishment mechanism with network assistance.

23. The method according to any one of claims 14 to 20, wherein when the second communication apparatus does not agree to perform the security establishment with the first communication apparatus by using the target mechanism, the first message is a reject message, and the reject message indicates one or more of the following: a reason for not agreeing to perform the security establishment with the first communication apparatus by using the target mechanism, a security establishment mechanism supported by the second communication apparatus, or a security establishment mechanism not supported by the second communication apparatus.

24. A communication apparatus, comprising one or more functional units, configured to implement the method according to any one of claims 1 to 12, or configured to implement the method according to any one of claims 14 to 23.

25. A communication apparatus, comprising a processor, wherein the processor is configured to execute program code, so that the communication apparatus implements the method according to any one of claims 1 to 12, or implements the method according to any one of claims 14 to 23.

26. A computer-readable storage medium, wherein the computer-readable storage medium stores a computer program, and when the computer program is run on a computer, the computer is enabled to implement the method according to any one of claims 1 to 12 or implement the method according to any one of claims 14 to 23.

27. A computer program product, comprising a computer program, wherein when the computer program is run on a computer, the computer is enabled to implement the method according to any one of claims 1 to 12 or implement the method according to any one of claims 14 to 23.

28. A communication system, comprising a first communication apparatus and a second communication apparatus, wherein
the first communication apparatus is configured to implement the method according to any one of claims 1 to 12; and
the second communication apparatus is configured to: receive a request message, and send a first message.

29. The communication system according to claim 28, wherein the second communication apparatus is further configured to implement the method according to any one of claims 14 to 23.
